(19) Europäisches Patentamt
European Patent Office
Office européen des brevets

(11) **EP 2 972 078 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **14710248.7**

(22) Anmeldetag: **13.03.2014**

(51) Int Cl.:
***G01B 21/04*** *(2006.01)*

(86) Internationale Anmeldenummer:
**PCT/EP2014/054978**

(87) Internationale Veröffentlichungsnummer:
**WO 2014/140188 (18.09.2014 Gazette 2014/38)**

(54) **VERFAHREN ZUR KORREKTUR EINER WINKELABWEICHUNG BEIM BETRIEB EINES KOORDINATENMESSGERÄTS**

METHOD FOR CORRECTING AN ANGULAR DEVIATION WHEN OPERATING A COORDINATE MEASURING MACHINE

MÉTHODE DE CORRECTION DE DÉVIATION ANGULAIRE LORS DE L'OPÉRATION D'UN APPAREIL DE MESURE DE COORDONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2013 DE 102013204581**

(43) Veröffentlichungstag der Anmeldung:
**20.01.2016 Patentblatt 2016/03**

(73) Patentinhaber: **Carl Zeiss Industrielle Messtechnik GmbH**
**73447 Oberkochen (DE)**

(72) Erfinder:
• **FUCHS, Andreas**
**73492 Rainau (DE)**
• **HELD, Tobias**
**86720 Nördlingen (DE)**
• **SAGEMÜLLER, Rainer**
**73434 Fachsenfeld (DE)**
• **SEITZ, Dominik**
**73525 Schwäbisch Gmünd (DE)**

(74) Vertreter: **Patentanwälte Bressel und Partner mbB**
**Potsdamer Platz 10**
**10785 Berlin (DE)**

(56) Entgegenhaltungen:
EP-A1- 1 764 579          DE-A1- 10 122 080
DE-A1-102008 006 927

**EP 2 972 078 B1**

**Beschreibung**

Die vorliegende Erfindung betrifft ein Verfahren zur Korrektur von Winkelabweichungen beim Betrieb eines Koordinatenmessgeräts, die durch verschiedene Einflüsse bedingt sind, sowie ein Koordinatenmessgerät, das zur Durchführung dieses Verfahrens eingerichtet ist.

Bekannt sind Koordinatenmessgeräte (KMG), deren bewegliche Teile verschiedene, zueinander rechtwinklige lineare Freiheitsgrade der Bewegung aufweisen. Zum Beispiel offenbart EP 1 764 579 A1 ein Koordinatenmessgerät mit drei translatorischen Bewegungsachsensachsen. Insbesondere dienen diese beweglichen Teile dazu, zumindest eine Messeinrichtung (zum Beispiel einen oder mehrere Sensoren und/oder Taster) des KMG zu bewegen, wobei die Messeinrichtung dazu dient, die Koordinaten von Messobjekten, insbesondere eines Werkstücks, zu messen. Im Idealfall sind die entsprechenden Führungen zur Führung der Bewegungen so ausgestaltet, dass die beweglichen Teile des KMG exakt rechtwinklig relativ zueinander bewegt werden können. Zum Beispiel soll die Pinole eines KMG in Portalbauweise, wobei an der Pinole ein Messkopf befestigt ist, exakt rechtwinklig zum ebenfalls beweglichen Schlitten des Portals bewegbar sein. In der Praxis sind die Führungen jedoch nicht ideal, wodurch folgende Geometrieabweichungen entstehen: translatorische Führungsabweichungen, rotatorische Führungsabweichungen und Winkelabweichungen.

Eine translatorische Führungsabweichung ist der Parallelversatz (ohne Kippen) des geführten Elementes quer zur Verschieberichtung. Translationsfehler treten aber nicht nur quer zur Verschieberichtung auf, sondern auch in Verschieberichtung. In diesem Fall werden diese Translationsfehler auch als Positionsfehler bezeichnet. Eine rotatorische Führungsabweichung ist das Verkippen des geführten Elementes um die drei Achsen eines kartesischen Koordinatensystems. Eine Winkelabweichung ist die Abweichung des Winkels zwischen den von zwei verschiedenen Führungen geführten linearen Bewegungen (beispielsweise entlang von zwei Verfahrachsen für den Messkopf eines KMG oder entlang der Verfahrachse der Pinole und der Verfahrachse des Portalschlittens) vom vorgegebenen Winkel. Die Begriffe Verfahrachse und Bewegungs-Achse werden synonym verwendet.

Bei vielen KMG stehen die Richtungen der verschiedenen geradlinigen Freiheitsgrade der Bewegung idealerweise im rechten Winkel zueinander und verlaufen entlang den Achsen eines kartesischen Koordinatensystems. Die Winkelabweichung wird in diesem Fall als Rechtwinkligkeitsabweichung bezeichnet. Eine Rechtwinkligkeitsabweichung des KMG ist daher die Abweichung des Winkels zwischen jeweils den Achsen zweier geradliniger Bewegungs-Freiheitsgrade vom Sollwinkel 90°. Auch Achsanordnungen mit anderen Sollwinkeln sind prinzipiell möglich. Rechtwinkligkeitsabweichungen und ihre Auswirkungen werden im Buch "Genau messen mit Koordinatenmessgeräten" von Hans-Gerd Pressel (expert Verlag; ISBN 3-8169-1434-9) Seite 23 - 28 beschrieben.

Für jede Bewegungs-Achse können Werte für drei translatorische Führungsabweichungen und drei rotatorische Führungsabweichungen angegeben werden. Im Fall eines KMG mit drei Bewegungs-Achsen (X, Y und Z), die im Idealfall die Achsen eines kartesischen Koordinatensystems bilden, beschreiben daher insgesamt 18 Führungsabweichungs-Werte oder Parameter die Abweichungen vom Idealfall. Bezieht man die 18 Führungsabweichungs-Werte auf die realen Achsen und nicht auf ein kartesisches Koordinatensystem, kommen noch drei Werte der Rechtwinkligkeitsabweichungen zwischen den Achsen hinzu, um die Führungsfehler zu beschreiben.

Neben KMGs mit drei kartesischen Achsen kommen auch häufig KMGs mit einem Drehtisch zum Einsatz, dessen Drehachse als vierte Achse bezeichnet werden kann. Unter einem Drehtisch wird auch eine Drehvorrichtung verstanden, mit der ein Messobjekt nicht wie bei einem Tisch lediglich aufgelegt wird, sondern auf andere Weise mit der Drehvorrichtung kombiniert wird. Die Anforderungen an die Genauigkeit von derartigen Vier-Achsen-Koordinatenmessgeräten nehmen zu. Im Fall von Drehtischen werden die nach der Norm ISO 10360 definierten höchstzulässigen Abweichungen (MPE$_{FR}$, MPE$_{FT}$, MPE$_{FA}$) mit zunehmend kleineren Toleranzen angegeben. MPE$_{FR}$ bezeichnet die höchstzulässige radiale Abweichung. MPE$_{FT}$ bezeichnet die höchstzulässige tangentiale Abweichung. MPE$_{FA}$ bezeichnet die höchstzulässige axiale Abweichung, während die tatsächliche Abweichung mit FR, FT, FA bezeichnet wird.

Insbesondere wenn ein Drehtisch unter Nutzung der Messsysteme des KMG kalibriert oder sein Bewegungsverhalten vermessen wird, sind für die Abweichungen FR, FT, FA bezüglich der Drehachse des Drehtischs auch die Abweichungen bezüglich der Bewegungs-Achsen des KMG (X-, Y-, Z-Achse) verantwortlich. Es hat sich gezeigt dass ein großer Anteil der Abweichungen bezüglich der Drehachse durch Winkelabweichungen, insbesondere Rechtwinkligkeitsabweichungen der Bewegungs-Achsen des KMG bedingt sind. Bei einem Drehtisch verursachen die Winkelabweichungen insbesondere unerwünscht hohe radiale Abweichungen (FR), tangentiale Abweichungen (FT) und axiale Abweichungen (FA).

Eine Aufgabe der vorliegenden Erfindung ist es, die Auswirkungen von Winkelabweichungen der Achsen von linearen Freiheitsgraden der Bewegung eines KMG auf Messergebnisse des KMG, insbesondere bei Verwendung einer Drehvorrichtung, zu reduzieren.

Die Erfindung beruht auf der Erkenntnis, dass die Winkelabweichung variabel ist, nämlich ortsabhängig, und/oder temperaturabhängig und/oder Beladungsmasse-abhängig ist. Es wird daher vorgeschlagen, die variable Winkelabweichung zu ermitteln und zur Korrektur zu verwenden. Dabei kann die Korrektur vor, während und/oder nach der Messung von Koordinaten ("Koordinatenmessung") eines Werkstücks durch das KMG durchgeführt werden.

Insbesondere ist es möglich, die Korrektur, zum Beispiel kontinuierlich, wiederholt oder bei Bedarf, während oder nach der Bewegung zumindest eines der beweglichen Teile des KMG durchzuführen, z. B. indem Werte der momentanen Positionen der beweglichen Teile des KMG abhängig vom Ort, von einer Temperatur während der Messung und/oder von einer während der Messung wirksamen Masse korrigiert werden.

Bei dem Ort handelt es sich zum Beispiel um den Ort eines Messkopfes, insbesondere eines Tasters, oder eines Sensors zur Bestimmung der Koordinaten eines Werkstücks oder um den Ort eines anderen beweglichen Teils des KMG. Wenn das bewegliche Teil des KMG, ein Taster oder Sensor zur Bestimmung der Koordinaten eines Werkstücks ist, befindet sich das bewegliche Teil insbesondere im Messbereich des KMG und somit auch in einem bestimmten Teilmessbereich. Wenn dieses bewegliche Teil ein Tastelement eines taktilen Tasters zum taktilen Antasten der Oberfläche eines Werkstücks zum Zweck der Bestimmung von dessen Koordinaten ist, befindet sich das Tastelement beim Antasten des Werkstücks in demselben Teilmessbereich des KMG wie das Werkstück. Allerdings ist darauf zu achten, dass beim Auswechseln des Tasters gegen einen anderen Taster mit anderen Abmessungen oder anderer Masse die Auswirkungen auf die Winkelabweichung berücksichtigt werden. Insbesondere führt das Auswechseln eines ersten Tasters gegen einen zweiten Taster mit anderer Taststiftlänge oder anderer Taststift-Ausrichtung dazu, dass sich andere bewegliche Teile des KMG in Bezug auf zumindest eine Bewegungs-Achse des KMG an einem anderen Ort befinden, wenn ein Werkstück an demselben Punkt seiner Oberfläche angetastet werden soll. Bei der Ortsabhängigkeit der Winkelabweichung ist dies zu berücksichtigen.

Der Teilmessbereich ist insbesondere ein zusammenhängender linearer Bereich (zum Beispiel entlang einer Verfahrachse des KMG), ein zusammenhängender flächiger Bereich (zum Beispiel definiert durch zwei Verfahrachsen des KMG) oder ein zusammenhängender Volumenbereich (zum Beispiel definiert durch drei Verfahrachsen des KMG). Beispielsweise entspricht der Teilmessbereich im Fall eines linearen Bereiches einem Teil, d.h. einem Abschnitt, einer Bewegungs-Achse des Koordinatenmessgeräts, oder im Fall eines flächigen Bereiches Teilen, d.h. Abschnitten, von zwei Bewegungs-Achsen des Koordinatenmessgeräts, und im Fall eines Volumenbereiches Teilen, d.h. Abschnitten, von drei oder mehr Bewegungs-Achsen des Koordinatenmessgeräts. Anders ausgedrückt kann ein Teilmessbereich jeweils durch einen Abschnitt einer Verfahrachse, oder durch Abschnitte von zwei Verfahrachsen, oder durch Abschnitte von drei oder mehr Verfahrachsen gebildet sein. Ein KMG kann bis zu n Bewegungsachsen aufweisen und alle oder ein Teil der Bewegungsachsen, mindestens drei, können zur Festlegung eines Volumenbereiches herangezogen werden. Die Winkelabweichung ist eine Winkelabweichung in dem betreffenden Abschnitt der Bewegungs-Achse bezüglich einer weiteren Bewegungs-Achse. Der Ort, in dem sich ein Werkstück oder ein Taster oder Sensor zur Bestimmung der Koordinaten des Werkstücks befinden, muss in diesem Fall nicht deckungsgleich mit einem solchen Teilmessbereich sein. Eine Abweichung von dem Teilmessbereich kann sich zum Beispiel durch eine bestimmte Tasterlänge und/oder Tasterausrichtung ergeben. Die Art, Konfiguration und Geometrie des Messkopfes, Tasters oder Sensors, haben eine Auswirkung auf die Lage des Teilmessbereichs, der auf Achsen-Abschnitte bezogen ist, auch bei unveränderter Lage des Werkstücks. D.h. bei Änderung des Sensors kann der Achsen-bezogene Teilmessbereich verändert sein, was bei dem erfindungsgemäßen Verfahren zur Korrektur der ortsabhängigen Winkelabweichung zu berücksichtigen ist.

Die Korrektur der Winkelabweichung kann zum Beispiel dadurch durchgeführt werden, dass eine der beiden Bewegungs-Achsen, auf die sich die Winkelabweichung bezieht, als korrekt im Koordinatensystem des Koordinatenmessgerätes liegende Referenzachse betrachtet wird. Dann kann die Ausrichtung der anderen der beiden Bewegungs-Achsen korrigiert werden, indem der Winkel zwischen den beiden Bewegungs-Achse entsprechend der Winkelabweichung korrigiert wird. Dies kann zum Beispiel durch eine an sich bekannte Koordinatentransformation erreicht werden.

Zusätzlich zu der Korrektur der Winkelabweichung kann insbesondere eine Korrektur von translatorischen und rotatorischen Fehlern zumindest einer Bewegungs-Achse des KMG erfolgen. Bereits oben wurde erwähnt, dass diese Fehler die Abweichungen von beweglichen Teilen des KMG entlang der Bewegungs-Achsen von der geradlinigen Idealbewegung beschreiben. Wie auch die Korrektur der Winkelabweichung kann die Korrektur dieser Fehler, zum Beispiel kontinuierlich, wiederholt oder bei Bedarf, während oder nach der Bewegung des zumindest einen beweglichen Teils des KMG durchgeführt werden.

Vorzugsweise wird der für die Korrektur zu verwendende Wert der Winkelabweichung erst dann ermittelt, wenn die verschiedenen beweglichen Teile des KMG bezüglich der Bewegungs-Achsen des KMG jeweils einen Ort erreicht haben, für den die Korrektur ausgeführt werden soll. Im Fall von kaskadierend zueinander wirksamen kartesischen Bewegungs-Achsen, wie es zum Beispiel bei einem KMG in Portalbauweise der Fall ist, ist der Gesamt-Bewegungszustand des KMG (der durch die Orte der verschiedenen beweglichen Teile des KMG bezüglich der Bewegungs-Achsen des KMG definiert ist) eindeutig durch den Ort bestimmt, an dem sich die in Bezug auf die letzte Bewegungs-Achse in der Kaskade beweglichen Teile befinden. Bei einem KMG in Portalbauweise ist diese letzte Bewegungs-Achse in der Kaskade die üblicherweise als Z-Achse bezeichnete Bewegungs-Achse, entlang der die Pinole bewegbar ist, welche den Sensor oder Messkopf trägt. Daher wird der für die Korrektur zu verwendende Wert der Winkelabweichung insbesondere abhängig von dem Ort ermittelt, an dem sich ein entlang dieser Bewegungs-Achse bewegliches Teil (zum Beispiel ein Sensor oder Taster) des KMG befindet.

Diese Vorgehensweise bei der Ermittlung des für die Korrektur zu verwendenden Wertes der Winkelabweichung hat den Vorteil, dass auch die Abhängigkeit der Winkelabweichung von zumindest einer weiteren Variablen (der Temperatur und/oder Beladungsmasse) auf einfache Weise berücksichtigt werden kann. Nach Erreichen des Bewegungszustandes, in dem die Korrektur durchzuführen ist, können auf einfache Weise die Werte der Variablen, von denen die Winkelabweichung abhängt, bestimmt werden und kann unter Berücksichtigung des vorher ermittelten Verhaltens der Winkelabweichung in Abhängigkeit von den Variablen der momentan gültige Wert der Winkelabweichung ermittelt werden.

Dieses Konzept ermöglicht es auch, die für die Ermittlung des momentan gültigen Wertes der Winkelabweichung erforderliche Information (die durch die Ermittlung des Verhaltens der Winkelabweichung in Abhängigkeit von den Variablen gewonnen wurde) auf einfache Weise zu speichern, zum Beispiel in Form von Daten-Tabellen, die separat von den Informationen über andere Führungsabweichungen, beispielsweise die rotatorischen Fehler der Bewegungs-Achsen, gespeichert werden.

Wird dagegen lediglich die Ortsabhängigkeit der Winkelabweichung berücksichtigt und korrigiert, ist es auch möglich, die Winkelabweichung gemeinsamen mit der Information über die rotatorischen Fehler der Bewegungs-Achsen zu speichern. Zum Beispiel kann der jeweilige rotatorische Fehler ortsabhängig um einen Offset-Wert korrigiert werden, der der an dem jeweiligen Ort gültigen Winkelabweichung entspricht. Diese korrigierten Werte der rotatorischen Fehler können dann gespeichert werden, um sie später für eine Korrektur sämtlicher Fehler der Bewegungs-Achsen verwenden zu können.

Angegeben wird insbesondere ein Verfahren zur Korrektur zumindest einer Winkelabweichung eines realen Winkels von einem idealen Winkel zwischen Bewegungs-Achsen eines Koordinatenmessgeräts, wobei die Winkelabweichung ortsabhängig, temperaturabhängig und/oder von einer Beladungsmasse abhängig ist, umfassend die Schritte

a-1) Ermittlung von Werten der ortsabhängigen Winkelabweichung in der Weise, dass

i) für zumindest zwei Teilmessbereiche des Koordinatenmessgeräts, die lediglich einen Teil eines gesamten Messbereichs des Koordinatenmessgeräts bilden, jeweils zumindest ein Wert ermittelt wird, wobei sich für verschiedene Teilmessbereiche des Koordinatenmessgeräts ermittelte Werte der ortsabhängigen Winkelabweichung unterscheiden oder unterscheiden können, und/oder

ii) für zumindest einen Teilmessbereich zumindest ein Wert ermittelt wird und für einen Gesamtmessbereich des Koordinatenmessgerätes zumindest ein Wert der Winkelabweichung ermittelt wird, wobei sich der zumindest eine ermittelte Wert für einen Teilmessbereich des Koordinatenmessgeräts von dem zumindest einen Wert für den Gesamtmessbereich unterscheidet oder unterscheiden kann, und

b-1) Korrektur der ortsabhängigen Winkelabweichung in einem oder mehreren Teilmessbereichen des Koordinatenmessgeräts, für den/die zumindest ein Wert ermittelt wurde, unter Verwendung des zumindest einen ermittelten Werts der ortsabhängigen Winkelabweichung,

und/oder die Schritte

a-2) Ermittlung von Werten der temperaturabhängigen Winkelabweichung bei mindestens zwei verschiedenen Temperaturen in der Weise, dass Werte der temperaturabhängigen Winkelabweichung in einem Temperaturbereich ermittelt werden und/oder Informationen zur Korrektur der temperaturabhängigen Winkelabweichung in einem Temperaturbereich erhalten werden,

b-2) Korrektur der temperaturabhängigen Winkelabweichung unter Verwendung eines der ermittelten Werte und/oder der erhaltenen Informationen aus Schritt a-2,

und/oder die Schritte

a-3) Ermittlung von einem Wert oder von mehreren Werten der Beladungsmasse-abhängigen Winkelabweichung bei Beladung des Koordinatenmessgeräts mit einer Beladungsmasse oder mit mindestens zwei verschiedenen Beladungs-Massen in der Weise, dass ein Wert für die Beladungsmasse-abhängige Winkelabweichung oder Werte der Beladungsmasse-abhängigen Winkelabweichung in einem Bereich von Beladungs-Massen ermittelt werden und/oder Informationen zur Korrektur der Beladungsmasse-abhängigen Winkelabweichung erhalten werden, und

b-3) Korrektur der Beladungsmasse-abhängigen Winkelabweichung unter Verwendung unter Verwendung eines der ermittelten Werte und/oder der erhaltenen Informationen aus Schritt a-3).

In dem vorgeschlagenen Verfahren ist von "zumindest einer Winkelabweichung" die Rede. Eine Winkelabweichung besteht jeweils in Bezug auf zwei idealerweise geradlinigen Bewegungs-Achsen eines KMG, zum Beispiel die X- und Y-Achse. Bei einem KMG mit drei idealerweise geradlinigen Bewegungs-Achsen können daher drei solche Winkelabweichungen ermittelt werden. Insbesondere kann das vorgeschlagene Verfahren daher für mehrere, insbesondere drei, Winkelabweichungen in gleicher Weise durchgeführt werden wie für eine Winkelabweichung.

Insbesondere kann auf Basis der korrigierten Winkelabweichung(en) die Messung von Koordinaten eines Werkstücks durch das KMG genauer durchgeführt (präzisiert) werden, da insbesondere die Position eines Sensors und/oder Tasters des KMG zur Messung der Koordinaten des Werkstücks nach der Korrektur durch die Korrektur genauer bekannt ist. Vorzugsweise gehört zu dem Verfahren daher auch der optionale Schritt der Messung von Koordinaten eines Werkstücks.

Durch das Verfahren können ortsabhängige, temperaturabhängige und/oder durch Masseneinflüsse bedingte Winkelabweichungen, d.h. Fehler, korrigiert werden. Das Verfahren kann entweder nur zur Korrektur eines ortsabhängigen Winkelfehlers, oder nur zur Korrektur eines temperaturabhängigen Winkelfehlers oder nur zur Korrektur eines durch Masseneinflüsse bedingten Winkelfehlers angewandt werden, oder eine beliebige mögliche Kombination dieser Einflüsse kann berücksichtigt werden. Bei der Korrektur eines ortsabhängigen Winkelfehlers werden zumindest die Schritte a-1) und b-1) ausgeführt, bei der Korrektur eines temperaturabhängigen Winkelfehlers zumindest die Schritte a-2) und b-2) und bei der Korrektur eines durch Masseneinflüsse bedingten Winkelfehlers zumindest die Schritte a-3) und b-3). Weitere Teil-Kombinationen von Verfahrensschritten sind

-   a-1) und b-1) und a-2) und b-2)
-   a-1) und b-1) und a-3) und b-3)
-   a-2) und b-2) und a-3) und b-3)

Insbesondere ist es möglich, die Korrektur der Schritte b-1), b-2) und/oder b-3) kontinuierlich, wiederholt oder bei Bedarf, während oder nach der Bewegung zumindest eines der beweglichen Teile des KMG, zum Beispiel eines Tasters oder eines Sensors, durchzuführen, z. B. indem Werte der momentanen Positionen der beweglichen Teile des KMG abhängig vom Ort, von einer Temperatur während der Messung und/oder von einer während der Messung wirksamen Masse korrigiert werden. Mit dem Verfahren wird eine Winkelabweichung korrigiert und mit dieser Information die Position des beweglichen Teils korrigiert. Weitere Korrekturen, wie eine Korrektur der eingangserwähnten translatorischen und/oder rotatorischen Führungsabweichungen, können hinzu treten. Insbesondere kann die Korrektur während des Messbetriebes eines KMG, während der Vermessung eines Werkstücks durchgeführt werden, was für alle beschriebenen und beanspruchten Verfahrensvarianten gilt. Werte der momentanen Positionen der beweglichen Teile des KMG, insbesondere eines Tasters oder eines Sensors, können somit im Messbetrieb korrigiert werden.

Die Erfindung betrifft allgemein die Korrektur von Winkelabweichungen bzw. Winkelfehlern, wie oben beschrieben. Im speziellen betrifft die Erfindung die Korrektur von Rechtwinkligkeitsabweichungen bzw. Rechtwinkligkeitsfehlern. Wenn im Folgenden der Einfachheit wegen von "Rechtwinkligkeitsabweichung" oder "Rechtwinkligkeitsfehler" die Rede ist, dann schließt dies immer auch den allgemeinen Fall der "Winkelabweichung" oder des "Winkelfehlers" ein, wenn nichts anderes angegeben ist.

Mit dem Verfahren wird im Speziellen eine Rechtwinkligkeitsabweichung ortsabhängig, temperaturabhängig und/oder beladungsmasseabhängig ermittelt. Der Begriff "Korrektur der Rechtwinkligkeitsabweichung" wird auch abgekürzt mit "Rechtwinkligkeits-Korrektur".

Die Korrektur kann direkt oder indirekt, allein oder mit anderen Werten, durchgeführt werden. Bei einem Verwenden eines Werts kann der Wert beispielsweise direkt für eine rechnerische Korrektur verwendet werden. Bei indirekter Durchführung der Korrektur kann ein Wert beispielsweise für Vorausberechnungen herangezogen werden, insbesondere für die Ermittlung einer Differenz zwischen Winkelabweichungen, wie weiter unten noch beschrieben. Werte der Winkelabweichung können allein oder ergänzend zu anderen Abweichungswerten, beispielsweise rotatorischen und/oder translatorischen Führungsabweichungen des KMG, zur Korrektur verwendet werden.

Der Begriff "Ermittlung" beschreibt allgemein einen Erkenntnisvorgang, im Speziellen die Gewinnung der Erkenntnis, wie groß eine Winkelabweichung ist. Die Ermittlung kann beispielsweise ein visuelles Ablesen sein und/oder ein maschinelles Ablesen. Desweiteren kann der Ermittlungsvorgang automatisiert sein, ohne dass es der Überprüfung oder der gesonderten Kenntnisnahme durch einen Menschen bedarf. Der Ermittlungsvorgang kann ein Messvorgang sein oder er kann einen oder mehrere Messvorgänge umfassen, beispielsweise mit einem Ermittlungssystem oder einem Messsystem. Der Ermittlungsvorgang kann eine oder mehrere Berechnungen umfassen, beispielsweise wenn ein Fehler mit Hilfe zuvor ermittelter Größen ermittelt werden soll, oder anderweitige mathematische Operationen umfassen, wie z.B. die Auffindung eines funktionalen Zusammenhangs zwischen der Winkelabweichung und einer Einflussgröße, oder eine Interpolation oder eine Extrapolation. Berechnungen können mit einer Rechenvorrichtung erfolgen.

Insbesondere kann bei der Ermittlung der Winkelabweichung eine Messung und/oder Berechnung der Winkelabweichung, wie an sich aus dem Stand der Technik bekannt, durchgeführt werden. Alternativ oder zusätzlich kann aus Informationen über die Winkelabweichung (die Informationen können insbesondere durch die Ermittlung und/oder Berechnung gewonnen werden) für unterschiedliche Teilmessbereiche, unterschiedliche Temperaturen und/oder unterschiedliche Beladungsmasse zusätzlich ermittelt werden, wie die Winkelabweichung sich im Messbereich des Koordinatenmessgerätes, in einem Temperaturbereich bzw. im Bereich möglicher Beladungsmassen verändert. Zum Beispiel kann ein Modell ermittelt werden, das die Winkelabweichung in Abhängigkeit von dem Ort, der Temperatur bzw. der Beladungsmasse beschreibt.

Eine Korrektur wird vorzugsweise derart durchgeführt, dass ermittelte Abweichungen rechnerisch korrigiert werden, vorzugsweise von der Steuerung eines KMG. Eine rechnerische Korrektur wird auch als CAA (Computer Aided Accuracy) bezeichnet, die beispielsweise durch ein mathematisches Modell dargestellt wird, welches in das Steuerungssystem implementiert ist. Daten der CAA können in der Steuerung eines KMG gespeichert werden, beispielsweise in einer Computer-lesbaren Datei. Insbesondere können CAA-Korrekturen in Echtzeit, d.h. während eines Messvorgangs, verrechnet werden. In dem Verfahren ermittelte Werte der Winkelabweichung können zu einer rechnerischen Korrektur herangezogen werden. Eine solche rechnerische Korrektur kann in analoger Weise durchgeführt werden kann, wie eine an sich bereits bekannte rechnerische Korrektur von Winkelabweichungen oder anderer Führungsabweichungen, beispielsweise mit an sich bekannten CAA-Verfahren.

Der Begriff "zumindest ein Wert" oder "zumindest ein ermittelter Wert" kann folgendes bedeuten: Es ist ein Wert gemeint, entweder die Winkelabweichung zwischen der X- und Y-Achse (insbesondere die Rechtwinkligkeitsabweichung xWy), oder die Winkelabweichung zwischen der X- und Z-Achse (insbesondere die Rechtwinkligkeitsabweichung xWz), oder die Winkelabweichung zwischen der Y- und Z-Achse (insbesondere die Rechtwinkligkeitsabweichung yWz). Oder es sind zwei Werte aus den vorangehend genannten Winkelabweichungen gemeint, oder alle drei.

Nachfolgend wird auf einzelne Aspekte der Korrektur der ortsabhängigen Winkelabweichung, der temperaturabhängigen Winkelabweichung und der von der Beladungsmasse abhängigen Winkelabweichung eingegangen.

Korrektur der ortsabhängigen Winkelabweichung

Eine ortsabhängige Winkelabweichung bedeutet beispielsweise, dass in einem Teilmessbereich die Winkelabweichung verschieden ist von der Winkelabweichung in einem anderen Teilmessbereich. Ein Ort bezeichnet insbesondere einen Teilmessbereich. Es kann von dem Verfahren aber auch der Fall umfasst sein, dass in verschiedenen Teilmessbereichen die Winkelabweichung gleich ist. Also ist es möglich, dass sich für verschiedene Teilmessbereiche des Koordinatenmessgeräts ermittelte Werte der ortsabhängigen Winkelabweichung unterscheiden oder nicht unterscheiden, wobei die Möglichkeit, dass sich Winkelabweichungen nicht unterscheiden durch die Formulierung "unterscheiden können" ausgedrückt ist. Die Winkelabweichung ändert sich aber im Allgemeinen von Ort zu Ort innerhalb des Gesamt-Messbereichs des KMG und somit von Teilmessbereich zu Teilmessbereich.

Es kann von dem Verfahren auch der Fall umfasst sein, dass in einem Teilmessbereich und in einem Gesamtmessbereich die Winkelabweichung gleich ist. Also ist es möglich, dass sich eine ermittelter Wert für einen Teilmessbereich des Koordinatenmessgeräts von einem Wert für den Gesamtmessbereich unterscheidet oder unterscheiden kann, wobei im letztgenannten Kann-Fall die Möglichkeit umfasst ist, dass sich die nicht Winkelabweichung nicht unterscheiden. Die Winkelabweichung ändert sich aber im Allgemeinen beim Vergleich des Gesamtmessbereiches mit einem Teilmessbereich.

Der in dieser Erfindungsbeschreibung verwendete Begriff "lokale Winkelabweichung" entspricht einer Winkelabweichung in einem Teilmessbereich und ist gleichbedeutend mit einer nur lokal, nämlich in dem Teilmessbereich, gültigen Winkelabweichung.

Ein "Teilmessbereich" ist ein örtlich begrenzter Messbereich, der Teil eines gesamten zur Verfügung stehenden Gesamtmessbereiches eines KMG ist. Jeder Teilmessbereich ist kleiner als der Gesamtmessbereich. Insbesondere ist der Gesamtmessbereich ein zusammenhängender linearer Bereich (zum Beispiel entlang einer Verfahrachse des KMG), ein zusammenhängender flächiger Bereich (zum Beispiel definiert durch zwei Verfahrachsen des KMG) oder ein zusammenhängender Volumenbereich (zum Beispiel definiert durch drei Verfahrachsen des KMG). Insbesondere ist der Teilmessbereich ein zusammenhängender linearer Bereich (zum Beispiel entlang einer Verfahrachse des KMG), ein zusammenhängender flächiger Bereich (zum Beispiel definiert durch zwei Verfahrachsen des KMG) oder ein zusammenhängender Volumenbereich (zum Beispiel definiert durch drei Verfahrachsen des KMG), wobei der Teilmessbereich kleiner ist als der Gesamtmessbereich.

Grundsätzlich können mit dem Verfahren Winkelabweichungen in verschiedenen Teilmessbereichen berücksichtigt werden. Insbesondere kann die Winkelabweichung ermittelt werden, indem sie in den verschiedenen Teilbereichen gemessen wird und/oder durch ein Rechenmodell beschrieben wird.

Das Verfahren kann so durchgeführt werden, dass die lokale Winkelabweichung nur dann rechnerisch berücksichtigt wird, wenn in dem betreffenden Abschnitt der Achse gemessen wird. Beispielsweise kann ein CAA-Datensatz, der die Informationen zur lokalen Winkelabweichungen enthält, zur rechnerischen Korrektur herangezogen werden, wenn in dem betreffenden Teilmessbereich gemessen wird.

Bei dem Verfahren wird vorzugsweise eine Steuerung verwendet, die dazu eingerichtet ist, die Winkelabweichungen des betreffenden Teilmessbereiches automatisch zu berücksichtigen wenn in dem betreffenden Messbereich des KMG gemessen wird. Die Steuerung ist dann vorzugsweise so eingerichtet, dass eine lokale Winkelabweichung automatisch unberücksichtigt bzw. deaktiviert bleibt, solange nicht in dem betreffenden, zugeordneten Teilbereich gemessen wird. Bei einer automatischen Berücksichtigung ist es bevorzugt, dass Übergänge zwischen Winkelabweichungs-Werten verschiedener Messbereiche zu glätten. Wenn von einer KMG-Steuerung beispielsweise von einem Winkelabweichungs-Wert in einem Teilmessbereich zu einem Winkelabweichungs-Wert in einem anderen, z.B. benachbarten, Teilmessbereich umgeschaltet wird und der Übergang zwischen den Werten sprunghaft ist, dann wird der Übergang vorzugsweise geglättet, beispielsweise mit zusätzlichen Stützstellen für die Winkelabweichungs-Werte im Übergangsbereich, oder mit Hilfe von Splines oder Polynomen, wodurch Fehlsteuerungen des Regelkreises vermieden werden können.

Eine weitere Ausgestaltung sieht vor, dass der Anwender vorgibt, dass in einem besonderen Bereich bzw. einem Teilmessbereich gemessen wird. Die lokal gültige Winkelabweichung wird dann auf Veranlassung des Anwenders bei der Korrektur berücksichtigt.

Die Teilmessbereiche können Messbereiche sein, die sich zu einem übergeordneten, größeren Messbereich ergänzen, beispielsweise zu dem Gesamt-Messbereich des KMG. Die Teilmessbereiche können aneinander anschließen, teilweise überlappen, oder es können Unterbrechungen zwischen Teilmessbereiche vorhanden sein. Es kann auch ein (größerer) Teilmessbereich einen anderen, kleineren Teilmessbereich einschließen. In letzterem Fall gilt vorzugsweise in dem größeren Teilmessbereich eine andere ortsabhängige Winkelabweichung als in dem kleineren Teilmessbereich, der von dem größeren umfasst wird. Zur Ermittlung der Winkelabweichung in dem größeren Teilmessbereich können Winkelabweichungen an mehreren Stellen innerhalb des größeren Teilmessbereiches ermittelt und gemittelt werden, oder es kann eine Winkelabweichungen in einem Teilbereich des größeren Teilmessbereiches ermittelt werden, vorzugsweise in der Mitte des größeren Teilmessbereiches und als Winkelabweichung für den größeren Teilmessbereich zugrunde gelegt werden. Beispielsweise entspricht der Teilmessbereich im Fall eines linearen Bereiches einem Teil, d.h. einem Abschnitt, einer Bewegungs-Achse des Koordinatenmessgeräts, oder im Fall eines flächigen Bereiches Teilen, d.h. Abschnitten, von zwei Bewegungs-Achsen des Koordinatenmessgeräts, und im Fall eines Volumenbereiches Teilen, d.h. Abschnitten, von drei oder mehr Bewegungs-Achsen des Koordinatenmessgeräts. Ein KMG kann bis zu n Bewegungsachsen aufweisen und alle oder ein Teil der Bewegungsachsen, mindestens aber drei, können zur Festlegung eines Volumenbereiches herangezogen werden. Wenn sich das jeweilige entlang der Bewegungs-Achse (Verfahrachse) des KMG bewegliche Teil des KMG in dem Abschnitt befindet und wenn zu diesem Zeitpunkt oder in diesem Zeitraum eine Koordinatenmessung eines Werkstücks durchgeführt wird, befindet sich das Werkstück in dem entsprechenden Teilmessbereich. Die Rechtwinkligkeitsabweichung in einem Abschnitt einer (ersten) Verfahrachse ist auf eine weitere (zweite) Achse bezogen, die zu der ersten Achse in einem Winkel steht.

Insbesondere durch lediglich lokal, in Abschnitten einer Bewegungs-Achse auftretende translatorische und / oder rotatorische Führungsfehler entstehen in den Abschnitten Rechtwinkligkeitsabweichungen in Bezug auf andere Bewegungs-Achsen. Dies ist ein Grund für die Ortsabhängigkeit.

Allgemein treten, wie oben erwähnt, translatorische und rotatorische Fehler bei der Bewegung von beweglichen Teilen eines KMG entlang einer Bewegungs-Achse auf. Auch nach einer rechnerischen Korrektur dieser translatorischen und rotatorischen Führungsabweichungen, die vorzugsweise durchgeführt wird, und zwar vor der Koordinatenmessung von Werkstücken, sind noch geringe translatorische und rotatorische Restfehler vorhanden, welche eine ortsabhängige Rechtwinkligkeitsabweichung verursachen.

Eine Verfahrachse entspricht einer Verschiebeachse bzw. einer Führungsbahn entlang welcher z. B. der Messkopf oder Sensor des KMG oder ein Portal oder ein Schlitten eines KMG verschoben bzw. verfahren wird. Die Verfahrachsen bzw. Verschiebeachsen des KMG werden im Fall eines kartesischen Koordinatensystems auch als X-, Y- oder Z-Achse des KMG bezeichnet. In verschiedenen Abschnitten einer Verfahrachse (d.h. wenn sich das entlang der Verfahrachse bewegliche Teil des KMG in dem jeweiligen Abschnitt befindet) kann die Winkelabweichung unterschiedlich sein. Eine auf einen Abschnitt bezogene Winkelabweichung ist eine lokale Winkelabweichung, die innerhalb dieses Abschnitts mit Bezug auf eine weitere Verfahrachse gültig ist. Grundsätzlich können mit dem Verfahren unterschiedliche Winkelabweichungen in unterschiedlichen Abschnitten berücksichtigt werden.

In einer Ausführungsform wird die Winkelabweichung in dem Abschnitt der Bewegungs-Achse des Koordinatenmessgeräts zusammen mit einer rotatorischen Führungs-Abweichung einer realen Bewegung von Teilen des Koordinatenmessgeräts entlang der Bewegungs-Achse von einer idealen Bewegung der Teile des Koordinatenmessgeräts entlang der Bewegungsachse berücksichtigt. Hierzu wird eine Korrekturfunktion zur Korrektur der Winkelabweichung und der rotatorischen Führungsabweichung gebildet. Die Korrekturfunktion wird aus Werten der Winkelabweichung in dem zumindest einen Teilmessbereich und Werten der rotatorischen Führungsabweichung gebildet. Die Werte der rotatorischen Führungsabweichung erstrecken sich vorzugsweise über einen längeren Abschnitt der Achse als der Teilmessbereich, beispielsweise über die gesamte Achse. Eine solche Korrekturfunktion, auch bezeichnet als "Korrekturdatensatz", kann durch Summation der lokalen Winkelabweichung mit einer rotatorischen Führungsabweichung gebildet werden. Der Einfluss lokaler Winkelabweichungen kann durch lokale Offsets in den Korrekturlinien zur Beschreibung der rotatorischen Bewegungsfehler beschrieben werden. Hierzu wird auf die Ausführungsbeispiele verwiesen. Bei benachbarten Abschnitten einer Verfahrachse ändert sich der Offset in einer Korrekturlinie zur Beschreibung der rotatorischen Bewegungsfehler wenn sich die Winkelabweichung ändert. Unstetigkeiten, die sich durch einen stufenförmige Änderung des Offsets ergeben, können durch übliche Verfahren (z.B. Splines oder Polynome) geglättet werden. Die Stetigkeit der Übergänge ist bevorzugt für eine Verarbeitung durch den Regelkreis der Messmaschine.

Das oben beschriebene Verfahren zur Korrektur der ortsabhängigen Winkelabweichung kann auf mehrere Abschnitte von Verfahrachsen und/oder auf verschiedene Verfahrachsen angewandt werden. Vorzugsweise werden die lokalen Winkelabweichungen in einem Teilmessbereich oberhalb eines Drehtisches berücksichtigt, wie nachfolgend noch beschrieben. Der Teilmessbereich oberhalb eines Drehtisches kann ein Messvolumen oberhalb des Drehtisches sein und durch Abschnitte der Verfahrachsen abgebildet werden.

In der oben genannten Variante a-1) ii) des Verfahrens wird für einen Gesamtmessbereich des Koordinatenmessgerätes zumindest ein Wert der Winkelabweichung ermittelt, wobei sich der zumindest eine ermittelte Wert für einen Teilmessbereich des Koordinatenmessgeräts von dem zumindest einen Wert für den Gesamtmessbereich unterscheidet oder unterscheiden kann. Der Gesamtmessbereich des Koordinatenmessgeräts schließt zumindest einen Teilmessbereich ein. Der Teilmessbereich ist also als Unterbereich in dem Gesamtmessbereich enthalten, und der Begriff "Gesamtmessbereich" bezeichnet einen im Vergleich zu einem Teilmessbereich größeren Messbereich. Der Gesamtmessbereich des KMG beschreibt den gesamten Raum, der für Koordinatenmessungen mit diesem KMG zugänglich ist. Der Gesamtmessbereich wird in diesem Zusammenhang auch als "globaler Messbereich" bezeichnet. Der Teilmessbereich wird auch als "lokaler Messbereich" bezeichnet.

Angegeben wird in einer speziellen Ausführungsform ein Verfahren zur Korrektur einer lokalen Winkelabweichung beim Betrieb eines Koordinatenmessgeräts (KMG), aufweisend die Schritte

- Ermittlung von zumindest eines Wertes der ortsabhängigen Winkelabweichung für zumindest einen Teilmessbereich,
- Ermittlung zumindest eines Wertes der Winkelabweichung des Gesamtmessbereichs,
- Korrektur der ortsabhängigen Winkelabweichung in einem oder mehreren Teilmessbereichen des Koordinatenmessgeräts wenn in dem Teilmessbereich eine Koordinatenmessung erfolgt, wobei der zumindest eine Wert der Winkelabweichung in dem betreffenden Teilmessbereich bei der Korrektur verwendet wird, und optional

- Korrektur der Winkelabweichung in dem Gesamtmessbereich, wenn in dem Gesamtmessbereich und au ßerhalb des Teilmessbereiches eine Koordinatenmessung erfolgt, wobei der zumindest eine Wert der Winkelabweichung in dem Gesamtmessbereich bei der Korrektur verwendet wird.

Die Winkelabweichung in dem Gesamtmessbereich kann durch die Bildung eines Mittelwertes aus mehreren Winkelabweichungen erhalten werden, wie beispielhaft noch beschrieben. Da die Verfahr- bzw. Verschiebeachsen in sich nicht exakt gerade sind, ergeben sich lokal bzw. abschnittsweise andere Winkelabweichungen zwischen den Achsen. Ferner können durch lediglich lokal, in Abschnitten einer Bewegungs-Achse auftretende translatorische Führungsfehler abschnittsweise unterschiedliche Rechtwinkligkeitsabweichungen entstehen. Zur Ermittlung der Winkelabweichung in dem Gesamtmessbereich wird vorzugsweise die Winkelabweichung an mehreren Stellen innerhalb des gesamten Messbereiches ermittelt und gemittelt, oder es wird eine Winkelabweichung in einem Teilbereich des Gesamtmessbereiches ermittelt, vorzugsweise in der Mitte des Gesamtmessbereiches und als Winkelabweichung für den gesamten Messbereich zugrunde angenommen.

Eine lokale Korrektur für einen Teilmessbereich kann, unter Einbeziehung der Winkelabweichung in dem Teilmessbereich und der Winkelabweichung in dem Gesamtmessbereich auf verschiedene Art und Weise erfolgen.

In einer Variante wird bei der Korrektur der ortsabhängigen Winkelabweichung in einem Teilmessbereich eine Differenz zwischen dem zumindest einen Wert der Winkelabweichung für den Gesamtmessbereich und dem zumindest einen Wert der Winkelabweichung für den Teilmessbereich ermittelt, und es wird die Differenz bei der Korrektur der Winkelabweichung verwendet. Angegeben wird also ein Verfahren wobei bei der Verwendung des/der Werte der Rechtwinkligkeitsabweichung in dem Teilmessbereich/den Teilmessbereichen in Schritt b-1) des Verfahrens eine Differenz zwischen einem oder mehreren Werten der Rechtwinkligkeitsabweichung in dem übergeordneten Gesamtmessbereich und einem oder mehreren Werten der Rechtwinkligkeitsabweichung in dem Teilmessbereich ermittelt wird, und die Differenz bei der Korrektur der Rechtwinkligkeitsabweichung einbezogen wird.

Die Differenz zwischen dem zumindest einen Wert der Winkelabweichung für den Gesamtmessbereich und dem zumindest einen Wert der Winkelabweichung für den Teilmessbereich gilt speziell für den betrachteten Teilmessbereich. Die Differenz kann zu einem Wert der Winkelabweichung des Gesamtmessbereichs addiert werden oder davon subtrahiert werden, insbesondere wenn in dem Teilmessbereich eine Messung erfolgt. Es wird anders ausgedrückt zumindest ein Wert für die Winkelabweichung des Gesamtmessbereichs durch die Differenz ergänzt, insbesondere wenn in dem Teilbereich gemessen wird.

In einer anderen Variante bleibt bei der Korrektur der Winkelabweichung in dem Teilmessbereich der zumindest eine Wert der Winkelabweichung für den Gesamtmessbereich unberücksichtigt und es wird nur der zumindest eine Wert der Winkelabweichung in dem Teilmessbereich bei der Korrektur der Winkelabweichung verwendet. In dieser Variante wird insbesondere bei der Messung in dem Teilmessbereich der zumindest eine Wert der Winkelabweichung in dem Gesamtmessbereich durch den zumindest einen Wert der Winkelabweichung in dem Teilmessbereich ersetzt. Es wird dann der Wert der Winkelabweichung in dem Teilmessbereich bei der Korrektur der Winkelabweichung in dem Teilmessbereich verwendet und der Wert der Winkelabweichung in dem Gesamtmessbereich bleibt unberücksichtigt. In dieser Variante wird insbesondere bei einer rechnerischen Korrektur ein Datensatz, der Werte der Winkelabweichung des Gesamtmessbereichs enthält, durch einen Datensatz, der Werte der Winkelabweichung des Teilmessbereiches enthält, ersetzt. Es ist auch möglich, einen oder mehrere Datensätze mit zusätzlichen Stützstellen für bereits berücksichtigte lokale Änderungen von Winkelabweichungen zur lokalen Korrektur hinzuzuziehen.

In einem Teilmessbereich des KMG können zusätzlich zu zumindest einer ortsabhängigen Winkelabweichung auch zumindest eine temperaturabhängige Winkelabweichung und/oder zumindest eine von der Beladungsmasse (z.B. Werkstück oder ein Einbauteil) abhängige Winkelabweichung bei der Korrektur einbezogen werden.

Es ist möglich, dass ein Einfluss einer Masse nur in einem bestimmten Teilmessbereich zu einer ortsabhängigen Winkelabweichung führt, dass sich also die Winkelabweichung ortsabhängig erst durch die Masse der Beladung ändert. Ein Beispiel ist die örtliche Positionierung eines Werkstücks. Die Werte der Winkelabweichung beschreiben in diesem Fall die ortsabhängige Änderung durch eine eingeleitete Kraft und/oder ein eingeleitetes Moment, beispielsweise ein Kippmoment. Die Erfindung betrifft somit auch eine Korrektur einer Winkelabweichung, die von einem Moment abhängig ist, insbesondere einem Kippmoment. Diese Kraft/Momenten-bedingten Werte der Winkelabweichung können, ebenso wie andere Werte, in Form eines Datensatzes in der Steuerung des KMG hinterlegt werden.

Es ist auch möglich, dass ein Einfluss einer Temperatur nur in einem bestimmten Teilmessbereich zu einer ortsabhängigen Winkelabweichung führt, dass sich also die Winkelabweichung ortsabhängig erst durch die geänderte Temperatur ändert. Diese Temperatur-bedingten Werte der Winkelabweichung können, ebenso wie andere Werte, in Form eines Datensatzes in der Steuerung des KMG hinterlegt werden.

Es ist in einer weiteren Variante möglich, mehrere verschiedene Winkelabweichung oder Änderungen mehrerer verschiedener Winkelabweichung in einem Teilmessbereich, die in verschiedenen Datensätzen enthalten sein können, bei der Korrektur additiv zu berücksichtigen bzw. zu kaskadieren, insbesondere wenn in diesem Teilmessbereich gemessen wird. Es können Winkelabweichungen, die durch verschiedene Ursachen bedingt sind, beispielsweise durch Temperatureinflüsse oder eingeleitete Kräfte, getrennt voneinander vermerkt werden, beispielsweise in verschiedenen Datensätzen, und bei der Korrektur einzeln oder zusammen berücksichtigt werden, beispielsweise durch Verwendung mehrerer Korrekturdatensätze in der Steuerung. Zum Beispiel können Werte einer ortsabhängigen Winkelabweichung in einem Teilmessbereich und Werte einer temperaturabhängigen Winkelabweichung in diesem Teilmessbereich, zusammen berücksichtigt werden. Oder es können Werte einer ortsabhängigen Winkelabweichung in einem Teilmessbereich und Werte einer Beladungsmasse-abhängigen Winkelabweichung in diesem Teilmessbereich, zusammen zur Korrektur berücksichtigt werden.

Verfahren zur Bestimmung von Rechtwinkligkeitsabweichungen sind bekannt, beispielsweise aus WO02090879A2 und aus Hans-Gerd Pressel, Genau messen mit Koordinatenmeßgeräten", expert Verlag; ISBN 3-8169-1434-9. Insbesondere Seite 23 - 28. Solche Verfahren können sowohl zur Bestimmung von Rechtwinkligkeitsabweichungen in einem Teilmessbereich als auch zur Bestimmung von Rechtwinkligkeitsabweichungen in einem Gesamtmessbereich angewandt werden.

Lokale Rechtwinkligkeitsabweichungen in einem oder mehreren Teilmessbereichen können auf an sich bekannte Art und Weise ermittelt werden. Eine beispielhafte Methode zur Bestimmung von Rechtwinkligkeitsabweichungen ist die Messung eines Winkelnormals. Eine weitere Methode ist die Umschlagsmessung eines diagonal aufgespannten Endmaßes in einer oder mehreren Positionen. Diese Methoden sind beschrieben in der Publikation "Genau messen mit Koordinatenmessgeräten", Hans-Gerd Pressel (expert Verlag; ISBN 3-8169-1434-9) Seite 23 - 28. Weiterhin können lokale Rechtwinkligkeitsabweichungen auch durch Messung eines Lehrrings, bestimmt werden.

In einer Ausführungsform des Verfahrens ist der erwähnte Teilmessbereich der Messbereich über einem Drehtisch. Vorzugsweise werden mit dem Verfahren die Winkelabweichungen im Messbereich über einem Drehtisch korrigiert. Durch die Korrektur der Winkelabweichungen des KMG im Bereich über einem Drehtisch können die radiale Abweichung FR, die tangentiale Abweichung FT und/oder die axiale Abweichung FA verbessert werden.

Winkelabweichungen in einem Teilmessbereich, insbesondere im Messbereich über einem Drehtisch, können beispielsweise mit Hilfe eines Stufenendmaßes ermittelt werden, insbesondere per Diagonalmessung eines Endmaßes, oder per Messung eines Winkelnormals.

Ferner können Winkelabweichungen auch im Bereich über einem Drehtisch, mit einem Testobjekt ermittelt werden, das in WO02090879A2 und in den Ausführungsbeispielen zu dieser Erfindung beschrieben ist. Ein Verfahren zur Bestimmung der Rechtwinkligkeitsabweichung, wird in der Patentanmeldung WO02090879A2 vorgestellt. WO02090879A2 beschreibt, insbesondere mit Bezugnahme auf Fig. 4, ein Testobjekt mit zwei Kugeln, die mit einem Abstand von der Drehachse des Drehtisches angeordnet sind. Außerdem sind die Kugeln so angeordnet, dass sie in Richtung der Drehachse ebenfalls einen Abstand aufweisen und eine Verbindungslinie zwischen den beiden Kugeln die Drehachse in etwa schneidet. Das Verfahren zur Bestimmung von Rechtwinkligkeitsabweichungen mit einem Testobjekt ist in WO02090879A2 erläutert, insbesondere auf den Seiten 17-22 unter Bezugnahme auf die Figuren 6,7, 8 und 10.

Mit einem Testobjekt wie in WO02090879A2 beschrieben kann auch die Lage einer Drehtischachse im Koordinatensystem des KMG bestimmt werden. Auch ein solches Verfahren zur Bestimmung der Lage einer Drehtischachse ist in WO02090879A2 angegeben. Ein Testobjekt mit zwei Testkörpern, vorzugsweise Kugeln, auf unterschiedlicher Höhe entlang der Drehachse, wie z.B. in Fig. 4 der WO02090879A2 beschrieben, ist auf dem Drehtisch positionierbar. Zur Bestimmung der Lage der Drehtischachse werden verschiedene Drehstellungen der Testkörper eingestellt und Bezugspunkte der Testkörper bestimmt. Anschließend wird aus den Bezugspunkten die Lage der Drehtischachse bestimmt. Für Einzelheiten wird auf die WO02090879A2 verwiesen. Beispielsweise erstreckt sich die Drehachse in etwa parallel zur Z-Achse des Gerätekoordinatensystems. In diesem Fall werden durch das spezielle Verfahren Rechtwinkligkeitsabweichungen zwischen der X Achse und der Z-Achse und zwischen der Y Achse und der Z Achse im Messbereich des Drehtisches kompensiert. Bei dieser Ausführungsform wird die Lage der Drehtischachse im Gerätekoordinatensystem ermittelt, wobei die so ermittelte Drehachslage aufgrund der Rechtwinkligkeitsabweichung der X-Achse zur Z-Achse und der Y-Achse zur Z-Achse nicht mit der realen, mechanischen Rotationsachse übereinstimmt. Durch diese Vorgehensweise zur Lagebestimmung der Drehachse werden Rechtwinkligkeitsabweichungen zwischen der X Achse und der Z-Achse (xWz) und zwischen der Y-Achse und der Z-Achse (yWz ) bereits kompensiert. Durch die Kompensation der Rechtwinkligkeitsabweichungen zwischen der X-Achse und der Z-Achse (xWz) und zwischen der Y Achse und der Z Achse (yWz ) wird eine Verbesserung in der radialen Abweichung FR (maximal erlaubter Wert $MPE_{FR}$) und tangentialen Abweichung FT (maximal erlaubter Wert $MPE_{FT}$) erwirkt. Das Verfahren nach dieser Ausführungsform ist vorteilhaft zur Vermessung von Werkstücken mit hoher Z-Ausdehnung auf dem Drehtisch. Allerdings wird durch die Neigung der auf diese Weise bestimmten Drehtischachse gegenüber der realen mechanischen Drehachse eine axiale Abweichung FA (maximal erlaubter Wert $MPE_{FA}$) verursacht, und die ermittelten Abweichungen FR und FT verbessern sich auf Kosten der Abweichung FA. Bei Formprüfungen am Werkstück, ist die Axialabweichung (= FA-Wert) der Drehachse häufig nicht von Interesse. Unter diesen Voraussetzungen ist es bevorzugt, die radiale Abweichung (=FR) zu optimieren. Im Ergebnis werden durch das Verfahren dieser Ausführungsform die Abweichungen FR, FT und FA zueinander ausgemittelt. Des Weiteren wird bei Bestimmung der Lage der Drehtischachse nach diesem Verfahren die Rechtwinkligkeitsabweichung yWx noch nicht korrigiert. Dies kann, sofern erwünscht, ergänzend erfolgen, beispielsweise durch eine Diagonalmessung mit einem entsprechend ausgerichteten Endmaß.

Wie erwähnt, sind Verfahren zur Bestimmung der Lage einer Drehtischachse durch Messung an mehreren Positionen entlang der Z-Achse an sich bekannt. Solche Verfahren werden in WO02090879A2 vorgestellt und auf die genannte Offenbarung der WO02090879A2 wird ausdrücklich Bezug genommen. Bei einem in WO02090879A2 vorgestellten Verfahren wird ein bereits erwähntes Testobjekt eingesetzt, welches wenigstens zwei Testkörper umfasst, die eine solche Oberfläche aufweisen, dass durch Antasten der Oberfläche mit der Tastkugel Koordinaten von wenigstens einem bezüglich der Oberfläche des Testkörpers fest bzw. reproduzierbar angeordneten Bezugspunkt des Testkörpers im Koordinatensystem der Basis (d.h. dem Gerätekoordinatensystem) bestimmbar sind. Ein möglicher Testkörper ist eine präzise gefertigte Kugel oder ein Quader. WO02090879A2 beschreibt, insbesondere mit Bezugnahme auf Fig. 4, ein Testobjekt mit zwei Kugeln als Testkörper, die mit einem Abstand von der Drehachse des Drehtisches angeordnet sind. Au ßerdem sind die Kugeln so angeordnet, dass sie in Richtung der Drehachse ebenfalls einen Abstand aufweisen. Es ist auch möglich, einen selbstzentrierenden Antastkörper, wie etwa ein Kugeltripel oder einen Konus einzusetzen. Wird beispielsweise eine Kugel als Testkörper eingesetzt, so kann durch Antasten der Kugeloberfläche dann eindeutig der Kugelmittelpunkt im Koordinatensystem der Basis bestimmt werden. Eine detaillierte Beschreibung der Methode ist angegeben in WO02090879A2, Seite 5 bis einschließlich Seite 10 und in den Patenansprüchen der WO02090879A2. Die Methode ist in den Figuren 4-10 der WO02090879A2 und der zugehörigen Figurenbeschreibung auf S. 12 bis einschließlich Seite 25, insbesondere auf den Seiten 15-16 und der Figur 5, beschrieben. Bei einem weiteren in WO02090879A2 vorgestellten Verfahren wird ein zylindrischer Prüfkörper auf der Drehtischoberfläche positioniert und in verschiedenen Drehstellungen und in verschiedenen Höhen vermessen. Dieses Verfahren ist auf den Seiten 3-4 und der Fig. 3 der WO02090879A2 erläutert.

In einer Variante der Erfindung weist der Teilmessbereich, insbesondere ein Teilmessbereich über einem Drehtisch, in dem der zumindest eine Wert der Winkelabweichung ermittelt wird, die gleiche oder eine ähnliche Dimensionierung auf, wie ein zu vermessendes Werkstück, insbesondere ein auf dem Drehtisch zu vermessendes Werkstück. Es wird insbesondere die Ermittlung des zumindest einen Werts der Winkelabweichung mit einem Testobjekt durchgeführt, das an die Größe des zu vermessenden Werkstücks angepasst ist. Das Testobjekt bildet insbesondere zumindest eine Länge des Werkstücks oder zumindest eine Raumdiagonale durch das Werkstück ab oder im Wesentlichen ab. Bei diesem Verfahren werden die Korrekturwerte bezogen auf die Größe des Werkstücks ermittelt, was zu einer verbesserten Korrektur führt. Zur Ermittlung der Winkelabweichung in einem so dimensionierten Messbereich, kann als Testkörper beispielsweise ein Endmaß verwendet werden, wobei das Endmaß eine Länge aufweist, die ein dem Werkstück entsprechendes Volumen durchspannt oder im Wesentlichen durchspannt, insbesondere diagonal durchspannt. Anders ausgedrückt ist das Endmaß, das zur Bestimmung der Winkelabweichung verwendet wird, vorzugsweise so lang oder in etwa so lang wie eine gedachte Linie, insbesondere Diagonale, durch das Werkstückvolumen. So wird bei diagonaler Positionierung des Endmaßes die Diagonale durch das Werkstückvolumen des Werkstücks durch die zu vermessende Endmaßlänge abgebildet. Ist der Teilmessbereich ein Bereich über einem Drehtisch kann beispielsweise ein Endmaß diagonal auf dem Drehtisch positioniert werden, wobei das Endmaß das Volumen eines später zu vermessenden Werkstücks diagonal durchspannt.

Ein weiteres Testobjekt, das an die Größe des zu vermessenden Werkstücks angepasst sein kann, ist ein bereits erwähntes und in WO02090879A2 grundsätzlich beschriebenes Testobjekt mit zwei Testkörpern. Die Testkörper weisen einen, vorzugsweise gleichen, Abstand von der Drehachse des Drehtisches auf und die Testkörper weisen in Richtung der Drehachse einen Abstand auf. Die Abstände von der Drehachse werden an die Breite des Werkstücks angepasst. Vorzugsweise werden die Abstände annähernd oder genau so gewählt wie die Breite des vermessenden Werkstücks. Wenn die Breite des Werkstücks variiert, dann werden die Abstände zur Drehachse vorzugsweise an die maximale Breite angepasst. Der Abstand in Richtung der Drehachse wird an die Höhe des Werkstücks angepasst. Vorzugsweise wird der Abstand in Richtung der Drehachse annähernd oder genau so gewählt wie die Höhe des zu vermessenden Werkstücks.

In einer Ausführungsform der Erfindung wird die Ermittlung des zumindest einen Werts der der Winkelabweichung mit einem Testobjekt durchgeführt, das an die Masse und/oder Position und/oder Orientierung des zu vermessenden Werkstücks angepasst ist. Es kann mit dem Testobjekt eine Beladungsmasse simuliert und die Winkelabweichung unter zumindest ähnlichen, oder identischen Massebedingungen durchgeführt wie sie später bei der Vermessung des Werkstücks herrschen.

Mit einem solchen Testobjekt können masseabhängige Anteile der Winkelabweichung erfasst werden. Beispielsweise kann ein Testobjekt, das an die Masse des zu vermessenden Werkstücks angepasst ist, in einem Teilmessbereich, insbesondere einem Teilmessbereich über einem Drehtisch, positioniert werden. Damit können orts- und masseabhängige Winkelabweichungen bestimmt werden. Ein Testobjekt kann sowohl an die Masse als auch an die Größe eines zu vermessenden Werkstücks, wie weiter oben beschrieben, angepasst sein. Ein Testobjekt, das an die Masse eines zu vermessenden Werkstücks angepasst ist, kann eine Masseverteilung aufweisen, die der Masseverteilung des Werkstücks entspricht oder im Wesentlichen entspricht. Zur Erzielung einer gewünschten Masseverteilung können an dem Testobjekt Zusatzmassen variabel angebracht bzw. anbringbar sein. Die Anpassung des Testobjekts kann an einen oder mehrere der Parameter erfolgen, die ausgewählt sind aus Masse, Position und/oder Orientierung des zu vermessenden Werkstücks. Vorzugsweise erfolgt eine Anpassung an Masse und/oder (Position und Orientierung). Durch eine Anpassung des Testobjekts an Masse und Position und Orientierung des zu vermessenden Werkstücks kann ein Kippmoment simuliert werden, welches durch die Masse und deren Pose (Position und Orientierung) entsteht.

Nachfolgend wird auf spezielle Aspekte eingegangen, welche die Korrektur der temperaturabhängigen Rechtwinkligkeitsabweichung und die Korrektur der Beladungsmasse-abhängigen Rechtwinkligkeitsabweichung betreffen

### Korrektur der temperaturabhängigen Winkelabweichung

Der Schritt a-2) des vorangehend genannten Verfahrens, kann alternativ zu Schritt a-1) und a-3), oder kumulativ mit Schritt a-1) und/oder a-3) durchgeführt werden. Entsprechend kann der Schritt b-2) des vorangehend genannten Verfahrens, alternativ zu Schritt b-1) und b-3), oder kumulativ mit Schritt b-1) und/oder b-3) durchgeführt werden. Eine Korrektur der temperaturabhängigen Winkelabweichung kann also alleiniger Verfahrenszweck sein oder zu anderen Korrekturen hinzutreten.

Die Temperaturen in Schritt a-2) und in Schritt b-2) sind vorzugsweise Umgebungstemperaturen. Vorzugsweise werden das KMG und ein Werkstück, sofern verwendet, auf eine gleichmäßige Temperatur temperiert, beispielsweise durch eine ausreichende Temperierungszeit.

In Schritt a-2) können temperaturabhängige Werte der Winkelabweichung erhalten werden, die zur Korrektur verwendet werden können. Oder es können Informationen zur Korrektur der temperaturabhängigen Winkelabweichung erhalten werden. Informationen zur Korrektur können beispielsweise Daten eines Modells der Temperaturabhängigkeit sein, insbesondere ein funktionaler Zusammenhang zwischen Winkelabweichung und Temperatur. Bei mehreren Messpunkten in Schritt a-2) kann zur Auffindung eines Modells oder funktionalen Zusammenhangs, beispielsweise eine Ausgleichsrechnung (Fitting) erfolgen, um für die Reihe von Messdaten die unbekannten Parameter eines Modells oder die Parameter einer vorgegebenen Funktion zu schätzen. Der funktionale Zusammenhang kann somit auf einer Funktion basieren, die durch eine Optimierungsrechnung am besten anpassbar ist, beispielsweise ein Polynom, aber die nicht zwingend den tatsächlichen physikalischen Zusammenhang wiedergibt. Auf Basis eines Modells oder einer Ausgleichsrechnung kann für eine beliebige andere Temperatur, die unterschiedlich ist zu den in a-2) verwendeten Temperaturen, die Winkelabweichung ermittelt werden.

In Schritt b-2) erfolgt die Korrektur, insbesondere im Messbetrieb. Es werden beispielsweise folgende Schritte durchgeführt:

- Koordinatenmessung bei einer Messtemperatur,
- optional Ermittlung von zumindest einem Wert der Winkelabweichung bei der Messtemperatur, wenn die Messtemperatur unterschiedlich ist zu den in Schritt a-2) verwendeten Temperaturen, und
- Korrektur der Winkelabweichung unter Verwendung zumindest einen Werts der Winkelabweichung bei der Messtemperatur.

Vorzugsweise werden das KMG und ein verwendetes Werkstück auf die Messtemperatur gleichmäßig temperiert, beispielsweise durch eine ausreichende Temperierungszeit.

Eine Ermittlung von einem oder mehreren Werten der Winkelabweichung bei der Messtemperatur ist nur dann vorgesehen, wenn die Messtemperatur unterschiedlich ist zu den in Schritt a-2) verwendeten Temperaturen. Entspricht eine der Temperaturen in Schritt a-2) der späteren Messtemperatur, dann ist eine erneute Ermittlung der Winkelabweichung nicht vorgesehen, da sie schon bekannt ist, und dieser Schritt ist nur optional. Sind die Temperaturen in Schritt a-2) verschieden von der späteren Messtemperatur, dann können die in a-2) erhaltenen Informationen zur Korrektur der Temperaturabhängigen Winkelabweichung verwendet werden. Befindet sich beispielsweise die Messtemperatur zwischen zwei Temperaturen, die in Schritt a-2) zugrunde gelegt wurden, dann kann die Winkelabweichung bei der Messtemperatur durch Interpolation oder mit einem oben erwähnten Modell oder funktionalen Zusammenhang ermittelt werden.

## Korrektur der Beladungsmasse-abhängigen Winkelabweichung

Es ist mit dem Verfahren möglich, eine Korrektur einer von einer Beladungsmasse abhängigen Winkelabweichung durchzuführen. Die Beladungsmasse bedeutet eine Masse, die in irgendeiner Form in das KMG eingebracht wird, womit also das KMG beladen wird.

Die von einer Masse, z.B. des Werkstücks, verursachte Gewichtskraft oder ein von einer Masse verursachtes Moment, zum Beispiel ein Kippmoment, können eine Ursache zumindest einer Winkelabweichung sein. Die Erfindung betrifft somit auch eine Korrektur einer Winkelabweichung, die von einem Moment abhängig ist, insbesondere einem Kippmoment. Die Masse kann zu einer Winkelabweichung über den gesamten Messbereich eines KMG führen, ohne dass nach Teilbereichen bzw. verschiedenen Orten unterschieden wird.

Der Schritt a-3) des vorangehend genannten Verfahrens, kann alternativ zu Schritt a-1) und a-2), oder kumulativ mit Schritt a-1) und/oder a-2) durchgeführt werden. Entsprechend kann der Schritt b-3) des vorangehend genannten Verfahrens, alternativ zu Schritt b-1) und b-2), oder kumulativ mit Schritt b-1) und/oder b-2) durchgeführt werden. Eine Korrektur der Beladungsmasse-abhängigen Winkelabweichung kann also alleiniger Verfahrenszweck sein oder zu anderen Korrekturen hinzutreten. Wie zuvor bereits erwähnt, kann eine von einer Beladungsmasse verursachte Winkelabweichung zusätzlich zu einer ortsabhängigen Winkelabweichung korrigiert werden.

Die Beladungsmasse kann insbesondere eine Werkstückmasse oder eine Einbaumasse sein. Eine Einbaumasse ist eine Masse, die aus einem beliebigen Betriebserfordernis oder zu einem beliebigen Zweck in das KMG eingebaut wird, und von der Masse des zu vermessendes Werkstücks verschieden ist. Eine Einbaumasse kann beispielsweise die Masse eines eingebauten Drehtisches, die Masse eines Prüfkörpers, die Masse eines Sensors, insbesondere eines Messkopfes, die Masse eines Tastersystems, die Masse einer Verlängerung zwischen Pinole und Messkopf, bzw. zwischen Messkopf und Tastelement, die Masse einer Werkstückaufspannung, die Masse einer Halterung z.B. für einen Laserspiegel zur CAA-Datenaufnahme oder eine Masse eines anderweitigen Einbauteils sein. Eine Einbaumasse kann die Masse eines auswechselbaren Teils sein, wie ein Sensor oder Messkopf. KMG weisen beispielsweise auswechselbare Sensoren/Taster auf, die unterschiedliche Massen haben können. Die jeweilige Masse kann die gesamte oder einen Teil der Beladung-Masse darstellen. Ein weiteres Beispiel eines auswechselbaren Teils ist ein temporär vorhandener Drehtisch. Die Beladungsmasse kann auch eine Testmasse sein, die zum Zweck der Bestimmung der Beladungsmasse-Abhängigkeit der Winkelabweichung in ein KMG eingebracht wird.

In Schritt a-3) können Beladungsmasse-abhängige Werte der Winkelabweichung erhalten werden, die zur Korrektur verwendet werden können. Oder es können Informationen zur Korrektur der Beladungsmasse-abhängigen Winkelabweichung erhalten werden. Informationen zur Korrektur können beispielsweise Daten eines Modells der Beladungsmasse-Abhängigkeit sein, insbesondere ein funktionaler Zusammenhang zwischen Winkelabweichung und Beladungsmasse. Bei mehreren Messpunkten in Schritt a-3) kann zur Auffindung eines Modells oder funktionalen Zusammenhangs beispielsweise eine Ausgleichsrechnung (Fitting) erfolgen, um für die Reihe von Messdaten die unbekannten Parameter eines Modells oder die Parameter einer vorgegebenen Funktion zu schätzen. Der funktionale Zusammenhang kann somit auf einer Funktion basieren, die durch eine Optimierungsrechnung am besten anpassbar ist, aber die nicht zwingend die tatsächlichen Einflussfaktoren enthält. Auf Basis eines Modells oder eines funktionalen Zusammenhangs kann für eine beliebige Beladungsmasse die Winkelabweichung ermittelt werden.

In Schritt b-3) erfolgt die Korrektur, insbesondere im Messbetrieb. Es werden vorzugsweise folgende Schritte durchgeführt:

- Koordinatenmessung bei einer Beladung mit einer Beladungsmasse, wobei die Beladungsmasse die Masse eines Werkstücks einschließt oder die Masse eines Werkstücks ist,
- optional Ermittlung von zumindest einem Wert der Winkelabweichung bei der Beladungsmasse, wenn die Beladungsmasse unterschiedlich ist zu den in Schritt a-3) verwendeten Beladungsmassen, und
- Korrektur der Winkelabweichung unter des zumindest einen Werts der Winkelabweichung bei der Beladungsmasse.

Neben dem Werkstück können noch ein oder mehr andere Massen vorhanden sein, z.B. Einbaumassen, die zur gesamten Beladungsmasse beitragen.

Eine Ermittlung von einem oder mehreren Werten der Winkelabweichung bei der Beladungsmasse ist nur dann vorgesehen, wenn die Beladungsmasse unterschiedlich ist zu den in Schritt a-3) verwendeten Beladungsmassen. Entspricht eine der Beladungsmassen in Schritt a-3) der späteren Beladungsmasse (inklusive Werkstück), dann kann eine erneute Ermittlung der Winkelabweichung entfallen und dieser Schritt ist nur optional.

Sind alle Beladungsmassen in Schritt a-3) verschieden von der späteren Beladungsmasse bei der Messung, dann kann die Winkelabweichung aufgrund der in a-3) erhaltenen Informationen ermittelt werden. Befindet sich beispielsweise der Wert der Beladungsmasse bei der Messung numerisch zwischen zwei Werten von Beladungsmassen, die in Schritt a-3) zugrunde gelegt wurden, dann kann die Winkelabweichung bei der Beladungsmasse durch Interpolation oder mit einem oben erwähnten Modell oder funktionalen Zusammenhang ermittelt werden.

Nachfolgend werden noch weitere Aspekte beschrieben, die generell auf alle Verfahrensvarianten anwendbar sind:

Bei dem erfindungsgemäßen Verfahren und dem nachfolgend noch beschriebenen erfindungsgemäßen KMG wird vorzugsweise ein Computerprogramm eingesetzt. Das Computerprogramm, wird auch als Messsoftware bezeichnet. In das Computerprogramm können unter anderem die Einflussgrößen, welche die Winkelabweichung beeinflussen, eingegeben werden, wie Teilbereiche, Temperaturen und Beladungsmassen.

Durch Angabe eines Messbereiches innerhalb des KMG, z.B. den von einem Werkstück eingenommenen Bereich, kennt die Steuerung den Bewegungsbereich des Messkopfs oder Sensors des KMGs. Es kann von der Steuerung entschieden werden ob der Messbereich innerhalb eines Teilbereiches liegt, für den zumindest ein Wert der Winkelabweichung ermittelt wurde. Es kann je nach bekannter aktueller Position des Messkopfs oder Sensors geprüft werden, ob er sich (noch) im Teilbereich befindet oder nicht. Bis zu einem gewissen Toleranzbereich, der an den Teilbereich anschließt, kann es akzeptiert werden, dass der Messkopf oder Sensor außerhalb des Teilbereiches misst. Und es kann auch im Toleranzbereich noch der zumindest eine Wert der Winkelabweichung der Winkelabweichung, der für den Teilbereich gilt, zugrunde gelegt werden. Der Toleranzbereich kann in der KMG-Steuerung eingestellt und von der Steuerung überwacht werden.

Wenn der Teilbereich oder der Toleranzbereich verlassen wird und die Werte der Winkelabweichung für diesen Teilbereich nicht mehr gültig sind, dann kann dies entweder ignoriert werden, d.h. die bisherigen Werte werden beibehalten, was mit zunehmender Entfernung vom Teilbereich oder Toleranzbereich zu einer ungenaueren Korrektur führt. In einer anderen Alternative können bei Verlassen des Teilbereiches andere Werte einer Winkelabweichung der Korrektur zugrunde gelegt werden, beispielsweise Werte eines übergeordneten Teilbereiches, Werte eines Gesamtmessbereiches, oder Werte eines benachbarten Teilbereiches, in welchem sich der Messkopf/Sensor nun befindet oder immer noch befindet.

Analoge Verfahrensweisen gelten bei der Einflussgröße Temperatur und der Einflussgröße der Beladungsmasse: Wenn die Temperatur geändert wird und ein Wert der Winkelabweichung bei der bisherigen Temperatur nicht mehr gültig sind, dann kann dies entweder ignoriert werden, d.h. der bisherige Wert wird beibehalten, was mit zunehmender Entfernung vom Gültigkeitsbereich zu einer ungenaueren Korrektur führt. In einer anderen Alternative können bei Verlassen der Temperatur und Einstellen auf eine neue Temperatur der Werte der Winkelabweichung bei der neuen Temperatur der Korrektur zugrunde gelegt werden. Das Gleiche gilt analog bei einer Veränderung der Beladungsmasse.

Bei einer Änderung des Werts einer Winkelabweichung können Sprünge oder Unstetigkeiten auftreten, welche geglättet werden können, zum Beispiel mit bekannten Glättungsfunktionen, wie Splines oder Polynome, oder durch zusätzliche Stützstellen.

Die erwähnte Messsoftware ist vorzugsweise dazu eingerichtet, Änderungen eines Werts der Winkelabweichung automatisch zu berücksichtigen wenn ein Teilmessbereich oder Toleranzbereich verlassen wird, und/oder eine Temperatur geändert wird und/oder eine Beladungsmasse geändert wird. In einem Rechner können Informationen über den Bewegungsbereich des KMGs hinterlegt werden, insbesondere durch Eingabe in ein Programm bzw. eine Messsoftware. Die Software kann beispielsweise entscheiden, ob ein Verfahrbereich innerhalb eines bestimmten Teilmessbereiches liegt. Die Messsoftware kann auf einen gültigen Wert der Winkelabweichung automatisch umschalten oder die Steuerung veranlassen, den gültigen Wert der Winkelabweichung der Korrektur zugrunde zu legen, wenn in einem anderen Messbereich gemessen wird, für den der betreffende Wert gültig ist, und/oder bei einer geänderten Temperatur gemessen wird, für die der Wert gültig ist, und/oder bei einer geänderten Beladungsmasse, z.B. durch ein geändertes Werkstück, gemessen wird, für welche der Wert gültig ist. Die anderen Werte gelten dann für den anderen Messbereich, die andere Temperatur bzw. die andere Masse. Bei der automatischen Änderung des Werts kann eine gegebenenfalls auftretende Unstetigkeit wie oben beschrieben geglättet werden, oder durch zusätzliche Stützstellen unterlegt werden, um eine bessere Regelung des Messgeräts zu ermöglichen.

Verschiedene Werte von Winkelabweichungen für verschiedene Teilbereiche, Temperaturen oder Beladungsmassen werden vorzugsweise in Form eines Datensatzes, oder in Form mehrerer verschiedener Datensätze gespeichert, beispielsweise in einer nachfolgend noch beschriebenen Steuerung eines KMG oder einer nachfolgend beschriebenen Korrektureinrichtung, die in eine Steuerung oder einen Rechner integriert sein kann.

In einer Ausführungsform der Erfindung wird ein Verfahren angegeben, wobei

- für zumindest zwei Teilmessbereiche des Koordinatenmessgeräts jeweils zumindest ein Wert einer Winkelabweichung, oder für zumindest einen Teilmessbereich des Koordinatenmessgeräts und einen Gesamtmessbereich des Koordinatenmessgeräts jeweils zumindest ein Wert einer Winkelabweichung, und/oder
- für zumindest zwei Temperaturen jeweils zumindest ein Wert einer Winkelabweichung, und/oder Informationen zur Korrektur einer temperaturabhängigen Winkelabweichung, und/oder
- für zumindest zwei Beladungsmassen jeweils zumindest ein Wert einer Winkelabweichung, und/oder Informationen zur Korrektur einer Beladungsmasseabhängigen Winkelabweichung

in dem Koordinatenmessgerät gespeichert wird/werden und bei der Korrektur der zumindest eine Wert und/oder die Informationen für den betreffenden Teilmessbereich oder Gesamtmessbereich und/oder für die betreffende Temperatur und/oder für die betreffende Beladungsmasse verwendet wird/werden, insbesondere automatisch verwendet wird/werden.

Die Speicherung des zumindest einen Werts oder der Information kann beispielsweise in dem Rechner oder der Steuerung des KMG erfolgen. Wird zu einem beliebigen späteren Zeitpunkt eine Messung im dem Teilmessbereich oder Gesamtmessbereich, bei der Temperatur oder mit der Beladungsmasse, wofür ein Wert oder eine Information gespeichert ist, durchgeführt, kann auf den Wert oder die Information zur Korrektur zurückgegriffen werden. Die Verwendung des gültigen Werts oder der gültigen Information zwecks Korrektur der Winkelabweichung erfolgt vorzugsweise automatisiert. In einem Rechner können Informationen über den Bewegungsbereich des KMGs hinterlegt werden, insbesondere durch Eingabe in ein Programm bzw. eine Messsoftware. In der Steuerung kann der gültige Wert der Winkelabweichung automatisch zugrunde gelegt werden, insbesondere auf Veranlassung des Messrechners oder der Messsoftware, wenn in einem neuen Messbereich gemessen wird und/oder bei einer geänderten Temperatur gemessen wird und/oder bei einer geänderten Beladungsmasse, z.B. durch ein geändertes Werkstück, gemessen wird.

Beispielsweise kann in einem Rechner des KMG ein Messplan vorgesehen sein, der einen oder mehrere Teilmessbereiche, Temperaturen und/oder Beladungsmassen enthält, wofür bereits Werte oder Informationen zur Rechtwinkligkeitsabweichung in der Steuerung hinterlegt sind. Veranlasst durch den Rechner können bereits im KMG, insbesondere in der Steuerung, hinterlegte Korrekturdaten aktiviert werden, wenn in dem betreffenden Teilmessbereich, bei der betreffenden Temperatur und/oder der betreffenden Beladungsmassen gemessen wird. Im Lauf der Betriebszeit des KMG können nach und nach Werte oder Informationen zu verschiedenen Teilmessbereichen, Temperaturen und/oder Beladungsmassen gespeichert werden und für eine Korrektur der Winkelabweichung bereit gestellt werden. Eine KMG-Steuerung oder Messsoftware, die dafür eingerichtet ist, wird auch als "selbstlernendes System" bezeichnet, in dem Sinne, dass die Notwendigkeit der Ermittlung von Werten oder Informationen zur Winkelabweichung aufgrund bereits gespeicherter Information im Laufe der Zeit mehr und mehr verringert wird. Ein KMG ist so vorzugsweise so eingerichtet, dass Werte und Informationen über die Winkelabweichung in verschiedenen Teilmessbereichen, bei verschiedenen Temperaturen und/oder Beladungsmassen verwaltet werden können.

In einer Variante, die insbesondere mit der zuvor dargestellten Ausführungsform kombinierbar ist, wird ein Verfahren angegeben, wobei

- Werten der Winkelabweichung oder den Informationen zur Korrektur der Winkelabweichung der Zeitpunkt der Ermittlung der Werte oder Informationen zugeordnet wird,
- eine Zeitspanne vom Zeitpunkt der Ermittlung bis zum Zeitpunkt der Korrektur der Winkelabweichung ermittelt wird,

- der Zeitspanne ein Richtwert zugeordnet wird, wobei der Richtwert eine Information über die Verlässlichkeit und/oder Validität der Werte der Winkelabweichung oder die Validität der Informationen zur Korrektur der Winkelabweichung enthält.

Unter einem Zeitpunkt ist insbesondere ein Datum und/oder eine Uhrzeit zu verstehen. Die Zeitspanne vom Zeitpunkt der Ermittlung bis zum Zeitpunkt der Korrektur der Winkelabweichung kann ermittelt werden, wenn der Zeitpunkt der Korrektur feststeht, beispielsweise der Zeitpunkt einer Messung eines Werkstücks mit dem KMG.

Ein Richtwert gibt eine Information darüber, ob die zu einem früheren Zeitpunkt ermittelten Werte der Winkelabweichung noch als verlässlich oder noch gültig anzusehen sind. Je länger die Zeitspanne ist, desto geringer kann beispielsweise die Gültigkeit angenommen werden, da sich äußere Bedingungen oder Eigenschaften des KMG geändert haben können bzw. die Wahrscheinlichkeit für solche Änderungen mit zunehmender Zeitspanne ansteigt. Nachfolgend werden einige Beispiele für die Ermittlung eines Richtwertes angegeben.

Ein Zusammenhang zwischen Zeitspanne und Richtwert kann vom Anwender angenommen werden, d.h. ein Richtwert kann abhängig von der Länge der Zeitspanne angenommen werden. Ein Richtwert kann stattdessen auf Basis von Messungen ermittelt werden. Beispielsweise kann nach bestimmten Zeitpunkten eine erneute Ermittlung von Winkelabweichungswerten erfolgen und die neu ermittelten Werte können mit den zuvor ermittelten Werten verglichen werden und daraus eine relative oder absolute Abweichung zwischen Werten ermittelt werden. Es kann daraus ein Zusammenhang zwischen Zweitraum und tatsächlicher oder wahrscheinlicher Abweichung ermittelt werden. Die Abweichung kann selbst als Richtwert verwendet werden. Die Abweichung kann als tatsächliche oder wahrscheinliche Abweichung einen Richtwert darstellen. Oder einem Abweichungswert kann eine Kennzahl zugeordnet werden, welche die relative oder absolute Höhe und/oder Art der Abweichung ausdrückt und die als Richtwert verwendet werden kann. Es können Bereiche von Abweichungswerten definiert werden, beispielsweise relative Bereiche wie 0 - 10%, 11-20%, 21-30% usw. und jedem Bereich eine Kennzahl zugeordnet werden, deren Wert eine Aussage über die Verlässlichkeit des Winkelabweichungswerts angibt.

Alternativ oder zusätzlich zu einem Richtwert kann ein Schwellwert definiert werden, der angibt, ob früher ermittelte Werte der Winkelabweichung oder die Informationen zur Korrektur der Winkelabweichung zu verwerfen und neu zu bestimmen sind. Die Definition des Schwellwertes kann von den Anforderungen an die Messgenauigkeit abhängen. Ein Schwellwert kann beispielsweise ein Richtwert sein, der eine festgelegte Schwelle darstellt. Wenn beispielsweise der Richtwert durch eine tatsächliche oder wahrscheinliche Abweichung der aktuellen Winkelabweichung von einer früheren Winkelabweichung ausdrückt, dann kann eine bestimmte Abweichung, beispielsweise 10% oder mehr von einem früher ermittelten Wert, als Schwellwert definiert werden. In einem weiteren Beispiel kann der Schwellwert eine bestimmte Kennzahl sein. In noch einem anderen Beispiel kann der Schwellwert eine bestimmte Zeitspanne sein. Wenn die Zeitspanne erreicht oder überschritten wurde, dann sind früher ermittelte Werte der Winkelabweichung oder die Informationen zur Korrektur der Winkelabweichung zu verwerfen und neu zu bestimmen.

In einem weiteren Aspekt betrifft die Erfindung ein Koordinatenmessgerät, das zur Durchführung des in dieser Beschreibung beschriebenen Verfahrens in einer beliebigen Ausführungsform oder beliebigen Kombinationen von Ausführungsformen eingerichtet ist. Die Erfindung betrifft auch die Verwendung eines Koordinatenmessgeräts zur Durchführung des Verfahrens. Das Koordinatenmessgerät ist insbesondere ein KMG in Portalbauweise.

Das Koordinatenmessgerät kann in beliebiger Kombination alle gegenständlichen Merkmale aufweisen, die bereits anhand der Beschreibung des erfindungsgemäßen Verfahrens beschrieben sind, wie zum Beispiel einen Drehtisch.

Insbesondere weist das Koordinatenmessgerät eine Ermittlungseinrichtung auf, die ausgestaltet ist, die Werte der Winkelabweichung zu ermitteln. Wie an anderem Ort hierin beschrieben, kann die Ermittlung von Winkelabweichungen unter Verwendung eines Endmaßes oder Testobjekts erfolgen. Ein Endmaß oder Testobjekt wird nicht als Teil der Ermittlungseinrichtung angesehen. Die Ermittlungseinrichtung kann der Verarbeitung von Informationen dienen, die durch Messung an einem Endmaß oder Testobjekt gewonnen werden, wobei durch die Verarbeitung der Informationen Werte der Winkelabweichung ermittelt werden. Die Ermittlungseinrichtung kann in einen nachfolgend beschriebenen Rechner integriert sein und/oder Teil einer nachfolgend beschriebenen Steuerung sein. Oder die Funktion der Ermittlungseinrichtung kann von einem Rechner und/oder einer Steuerung übernommen werden. D.h. Rechner und/oder Steuerung können auch Ermittlungseinrichtung sein, neben der Erfüllung weiterer bekannter Funktionen.

Alternativ oder zusätzlich kann das Koordinatenmessgerät eine Korrektureinrichtung aufweisen, die ausgestaltet ist, die Korrektur der Winkelabweichung und gegebenenfalls von einer oder mehreren Führungsabweichungen (Achsen-Abweichungen) durchzuführen. Die Korrektureinrichtung ist insbesondere dazu eingerichtet, eine Korrektur der Winkelabweichung eines realen Winkels von einem idealen Winkel zwischen Bewegungs-Achsen/Verfahrachsen des Koordinatenmessgeräts vorzunehmen. Die Korrektureinrichtung kann in einen nachfolgend beschriebenen Rechner integriert sein und/oder Teil einer nachfolgend beschriebenen Steuerung sein. Oder die Funktion der Korrektureinrichtung kann von einem Rechner und/oder einer Steuerung übernommen werden. D.h. Rechner und/oder Steuerung können auch Korrektureinrichtung sein, neben der Erfüllung weiterer bekannter Funktionen.

Die Korrektureinrichtung ist insbesondere dazu eingerichtet,

- bei Koordinatenmessung in einem Teilmessbereich des Koordinatenmessgeräts eine Winkelabweichung unter Verwendung zumindest eines Wertes der Winkelabweichung in dem Teilmessbereich zu korrigieren, und/oder
- bei Koordinatenmessung bei einer Messtemperatur eine Winkelabweichung unter Verwendung zumindest eines Wertes der Winkelabweichung bei der Messtemperatur zu korrigieren, und/oder
- bei Koordinatenmessung bei Beladung mit einer Masse eine Winkelabweichung unter Verwendung zumindest eines Wertes der Winkelabweichung bei der Beladung mit der Masse zu korrigieren,

vorzugsweise in Zusammenwirkung mit einer Steuerung des KMG oder als Teil einer Steuerung.

Noch spezieller ist die Korrektureinrichtung dazu eingerichtet

- bei Koordinatenmessung in einem Gesamtmessbereich des Koordinatenmessgeräts eine Winkelabweichung unter Verwendung zumindest eines Wertes der Winkelabweichung in dem Gesamtmessbereich zu korrigieren und bei Koordinatenmessung in einem Teilmessbereich des Koordinatenmessgeräts eine Winkelabweichung unter Verwendung zumindest eines Wertes der Winkelabweichung in dem Teilmessbereich zu korrigieren, und/oder
- bei Koordinatenmessung in einem ersten Teilmessbereich des Koordinatenmessgeräts eine Winkelabweichung unter Verwendung zumindest eines Wertes der Winkelabweichung in dem ersten Teilmessbereich zu korrigieren und bei Koordinatenmessung in einem zweiten Teilmessbereich des Koordinatenmessgeräts eine Winkelabweichung unter Verwendung zumindest eines Wertes der Winkelabweichung in dem zweiten Teilmessbereich zu korrigieren, und/oder
- bei Koordinatenmessung bei einer ersten Messtemperatur eine Winkelabweichung unter Verwendung zumindest eines Wertes der Winkelabweichung bei der ersten Messtemperatur zu korrigieren, und bei Koordinatenmessung bei einer zweiten Messtemperatur eine Winkelabweichung unter Verwendung zumindest eines Wertes der Winkelabweichung bei der zweiten Messtemperatur zu korrigieren und/oder
- bei Koordinatenmessung bei Beladung mit einer ersten Masse

eine Winkelabweichung unter Verwendung zumindest eines Wertes der Winkelabweichung bei der Beladung mit der ersten Masse zu korrigieren, und bei Koordinatenmessung bei Beladung mit einer zweiten Masse

eine Winkelabweichung unter Verwendung zumindest eines Wertes der Winkelabweichung bei der Beladung mit der zweiten Masse zu korrigieren.

Das Koordinatenmessgerät kann eine Steuerung aufweisen, die die Bewegung der beweglichen Teile des KMG entlang der Bewegungs-Achsen steuert. Weiterhin kann die Steuerung folgende Funktionen erfüllen, Programmierung und Steuerung des Messablaufs, Datenerfassung und Auswertung, vorzugsweise in Zusammenwirkung mit einem Rechner.

Die Steuerung ist vorzugsweise zur Durchführung der beschriebenen Verfahren eingerichtet. Insbesondere kann diese Steuerung die Ermittlungseinrichtung aufweisen. Alternativ oder zusätzlich kann diese Steuerung die Korrektureinrichtung, oder einen Teil davon, aufweisen, oder die Funktion der Korrektureinrichtung ganz oder teilweise erfüllen. Alternativ kann die Steuerung mit der Korrektureinrichtung verbunden sein, beispielsweise mit einem Rechner, der die Korrektureinrichtung (teilweise) enthält oder die Funktion der Korrektureinrichtung ganz oder teilweise erfüllt. In allen Fällen kann die Korrektureinrichtung der Steuerung ermöglichen, die Bewegungssteuerung auf Basis der Korrektur der ortsabhängigen Winkelabweichung durchzuführen. Die Genauigkeit der Bewegungssteuerung ist somit verbessert. Außerdem präzisiert die Korrektur vorzugsweise auch die Bestimmung der momentanen Position eines Sensors und/oder Tasters zur Messung von Koordinaten eines Werkstücks und präzisiert somit auch die Messung der Koordinaten.

Insbesondere weist das Koordinatenmessgerät einen Rechner mit einer Messsoftware auf (nachfolgend zusammenfassend als "Rechner" bezeichnet), die zur Durchführung der vorangehend beschriebenen Verfahren eingerichtet sind. Der Rechner ist vorzugsweise mit der Steuerung zum Austausch von Informationen, wie zum Beispiel Befehle und Statusmeldungen, verbunden. Der Rechner kann die Verarbeitung der gewonnenen Daten durchführen. Die bereits erwähnte Korrektureinrichtung kann in den Rechner integriert sein, beispielsweise im Rahmen eines Programms, beispielsweise als Teil der Messsoftware. Weitere mögliche Funktionen des Rechners sind: automatischer Ablauf des Messprogramms, Transformieren der Messpunkte vom Geräte-Koordinatensystem in jedes beliebige Werkstückkoordinatensystem, Auswerten und Darstellen der Messergebnisse.

In einer Ausführungsform ist die Kommunikation von Rechner und Steuerung derart eingerichtet, dass der Rechner der Steuerung mitteilt, dass in einem Teilmessbereich gemessen wird. Dies kann z.B. innerhalb eines Prüfplans durch Aktivierung eines Buttons in der Oberfläche einer Messsoftware realisiert werden. Weitere Möglichkeiten sind, ohne Beschränkung, eine Checkbox, ein Fußschalter, ein Kommando oder ein Skript-Befehl, wie z.B. ein PCM-Kommando (Parameter codierter Messablauf), Temperatursensoren, sonstige Sensoren, wie Dehnmessstreifen, die eine Messtischverbiegung detektieren, oder mechanische Schalter an Palettensystemen.

Die Schritte eines Messplans, wie Verfahrwege entlang der KMG-Achsen, sowie Datensätze zur Korrektur für einen oder mehrere Teilmessbereiche, für einen Gesamtmessbereich, für Temperaturen und/oder für Beladungsmassen können in eine Messsoftware des Rechners eingegeben werden. Vom Rechner können diese Informationen gespeichert werden und in der Korrektureinrichtung, die in den Rechner oder die Steuerung integriert sein kann, hinterlegt werden, insbesondere in Form maschinenlesbarer Datensätze, wie sogenannter CAA-Datensätze oder CAA-Felder. Korrekturdatensätze werden vorzugsweise auf dem Steuerungsrechner hinterlegt.

Die Korrektureinrichtung kann eine automatische Korrektur mit dem einem Teilmessbereich zugeordneten Datensatz durchführen wenn in diesem Messbereich gemessen wird, und/oder die Korrektur mit dem einem Gesamtmessbereich zugeordneten Datensatz wenn im Gesamtmessbereich und außerhalb des Teilmessbereiches gemessen wird, und/oder die Korrektur mit dem einer Temperatur zugeordneten Datensatz wenn bei dieser Temperatur gemessen wird, und/oder die Korrektur mit dem einer Beladungsmasse zugeordneten Datensatz wenn bei dieser Beladungsmasse gemessen wird.

Bei einer ortsabhängigen Korrektur sind das Umschalten auf einen Datensatz (ein CAA Feld) zur Korrektur, oder das Zuschalten eines zweiten Datensatzes am Ort der aktuellen Messung, bevorzugte Optimierungsmöglichkeiten. Es ist alternativ dazu ebenso möglich, dass lokale Winkelabweichungen mittels eines einzelnen Datensatzes beschrieben und korrigiert werden, der die Informationen zu Winkelabweichungen in mehreren Teilmessbereichen enthält. Informationen zu Winkelabweichungen in mehreren Teilmessbereichen können zum Beispiel in einem Datensatz addiert sein.

Durch die Aufnahme von Informationen zu Winkelabweichungen in mehreren Teilmessbereichen, insbesondere durch Addition, können sich Unstetigkeiten in einem Datensatz ergeben, beispielsweise im Übergangsbereich zwischen verschiedenen Teilmessbereichen, insbesondere im Übergang von einem übergeordneten zu einem untergeordneten Teilmessbereich. Unstetigkeiten sind nachteilig für den Regelkreis der KMG-Steuerung und sie werden vorzugsweise durch ein bekanntes mathematisches Glättungsverfahren, insbesondere eine bekannte Glättungsfunktionen geglättet. Beispiele für Glättungsfunktionen sind Splines oder Polynome. Auch eine Kombination aus beiden Verfahren ist denkbar.

Das Koordinatenmessgerät kann einen Speicher aufweisen, in dem folgende Informationen gespeichert sind:

- für zumindest zwei Teilmessbereiche des Koordinatenmessgeräts jeweils zumindest ein Wert einer Winkelabweichung, oder für zumindest einen Teilmessbereich des Koordinatenmessgeräts und einen Gesamtmessbereich des Koordinatenmessgeräts jeweils zumindest ein Wert einer Winkelabweichung, und/oder
- für zumindest zwei Temperaturen jeweils zumindest ein Wert einer Winkelabweichung, und/oder Informationen zur Korrektur einer temperaturabhängigen Winkelabweichung,
- für zumindest zwei Beladungsmassen jeweils zumindest ein Wert einer Winkelabweichung, und/oder Informationen zur Korrektur einer Beladungsmasse-abhängigen Winkelabweichung.

Die Informationen können zur Korrektur im Rahmen des erfindungsgemäßen Verfahrens verwendet werden. Der Speicher kann Teil der Korrektureinrichtung, der Steuerung oder des Rechners sein.

Ferner gehört zum Umfang der Erfindung ein Computerprogramm, welches die Schritte des erfindungsgemäßen Verfahrens durchführt und/oder steuert. Insbesondere weist das Computerprogramm Programmcode-Mittel auf, die auf einem computerlesbaren Datenträger gespeichert sein können.

Vorzugsweise ist in das Computerprogramm ein Messplan eingebbar, der eine oder mehrere Teilmessbereiche enthält, beispielsweise Messungen und/oder Fahrbewegungen in einem oder mehreren Teilmessbereichen enthält, und/oder der eine oder mehrere Messtemperaturen, und/oder eine oder mehrere Beladungsmassen enthält.

Außerdem gehört zum Umfang der Erfindung ein Datenträger, auf dem eine Datenstruktur gespeichert ist, die nach einem Laden in einen Arbeits- und/oder Hauptspeicher eines Computers oder Computer-Netzwerkes die Schritte des erfindungsgemäßen Verfahrens durchführt und/oder steuert.

Die Erfindung wird nachfolgend anhand spezieller Ausführungsbeispiele beschrieben. Es zeigen:

Fig. 1    Stufenendmaßmessung in der Ebene YZ zur Bestimmung einer Rechtwinkligkeitsabweichung,

Fig. 2    Aufnahmepositionen des Endmaßes zur Bestimmung der in Fig. 1 dargestellten Rechtwinkligkeitsabweichungen,

Fig. 3    Prinzipdarstellung der Drehtischposition in Vergleich zu einem Ort, an dem die globale Rechtwinkligkeitsabweichung ermittelt wird,

Fig. 4    Aufbau zur Bestimmung der Rechtwinkligkeitsabweichung und/oder Drehachslage im Raum mit 2 Prüfkugeln

Fig. 5    Vergleich der Bestimmung der Rechtwinkligkeitsabweichung für ein großes / kleines Werkstück

Fig. 6    Darstellung einer Korrekturlinie xRy mit einbezogenem Offset durch eine lokale Rechtwinkligkeitsabweichung

Fig. 7    einzelne Darstellungen der Korrekturlinie xRy und einer lokalen Rechtwinkligkeitsabweichung,

Fig. 8    Darstellung einer Korrekturlinie xRy mit eingerechneter globaler Rechtwinkligkeitsabweichung

Fig. 9 a-b    Ablaufdiagramme verschiedener Varianten des erfindungsgemäßen Verfahrens

Fig. 10    ein erfindungsgemäßes Koordinatenmessgerät.

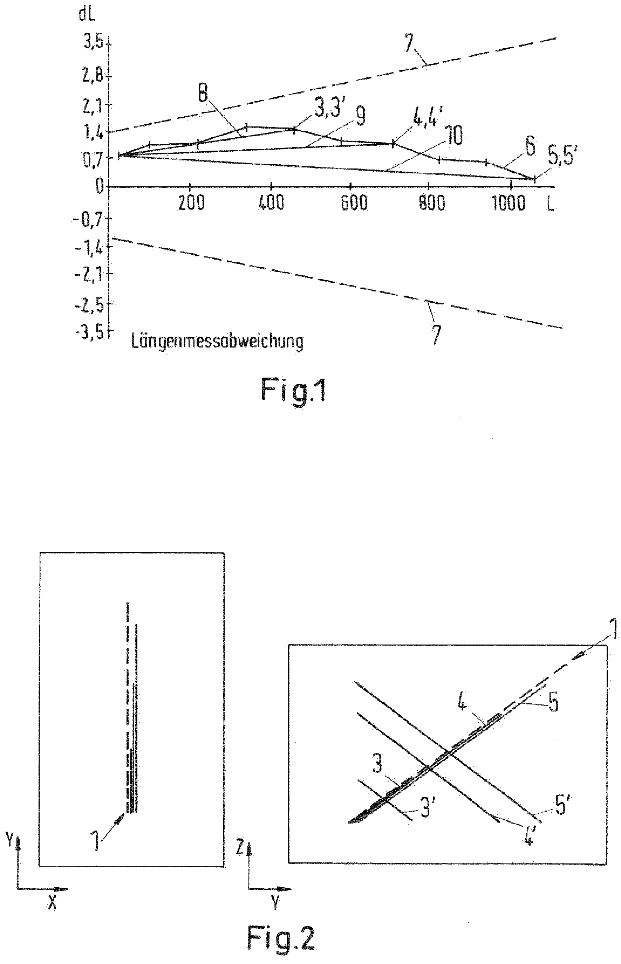

Fig. 1 zeigt verschiedene Rechtwinkligkeitsabweichungen in der Y-Z-Ebene eines KMG. Ein Stufenmaß wird platziert wie in der Fig. 2 dargestellt. Ein Stufenendmaß 1 wird diagonal in der Y-Z-Ebene des Gerätekoordinatensystems platziert. Die Fig. 2 rechts zeigt den Blick auf die Y-Z-Ebene und die Fig. 2 links zeigt die Blickrichtung parallel zur Y-Z-Ebene. In der Fig. 2 rechts ist die diagonale Anordnung des Endmaßes 1 gezeigt, wobei unter den Bezugszeichen 3, 4, 5 drei verschiedene Abstände innerhalb eines gleichen Stufenendmaßes abgebildet sind. Unter dem Bezugszeichen 5 ist die längste Endmaßdistanz, unter dem Bezugszeichen 4 eine mittlere Endmaßdistanz und unter dem Bezugszeichen 3 die kürzeste Endmaßdistanz, die gemessen wurde, gezeigt. Bei der Messung der Distanzen 3, 4 und 5 steht das Endmaß diagonal nach rechts oben, wenn man die in Fig. 2 rechts gezeigte Blickrichtung zugrundelegt. Weitere Messungen der Distanzen 3, 4 und 5 erfolgen, indem das Endmaß um 180° um die Z-Achse gedreht wird, sodass es ebenfalls diagonal, und im gleichen Winkel, diesmal aber von rechts unten nach links oben in der Y-Z-Ebene angeordnet ist. Die so gemessenen Distanzen sind mit 3', 4' und 5' bezeichnet. In der gezeigten Blickrichtung der Fig. 2 rechts ergibt sich eine kreuzförmige Anordnung der Distanzen 3 und 3', 4 und 4' bzw. 5 und 5'. Zur Messung der Distanzen 3', 4' und 5' wurde das Endmaß jeweils etwas versetzt, damit man eine kreuzförmige Anordnung zu den Distanzen 3, 4 bzw. 5 erhielt und im gleichen Achsabschnitt gemessen werden konnte. Die Distanzen 3, 4, 5, 3', 4', und 5' wurden jeweils mehrfach gemessen. Das Ergebnis ist in der Fig. 1 gezeigt. Die Abszisse in der Auftragung nach Fig. 1 zeigt die Messlänge in Millimeter verschiedener Längenmessungen von dem Endmaß, wobei die Messungen 3, 3', 4, 4' und 5, 5' unter weiteren Längenmessungen weiterer Distanzen des Stufenenmaßes enthalten sind. Auf der Ordinate ist die Längenabweichung dL zu den kalibrierten entsprechenden Endmaßlängen aufgetragen. Aus mehreren Längenmessungen an jeweils gleichen Längen, wobei das Endmaß 1 jeweils auch um 180° um die Z-Achse gedreht wurde, wie in der Fig. 2 rechts gezeigt, wurde der arithmetische Mittelwert der Längenabweichung berechnet. Die Kurve 6 in Fig. 1 verläuft hierbei durch die berechneten Mittelwerte und beschreibt somit die ermittelte Längenmessabweichung. Die Kurven 7 in Fig. 1 beschreiben die maximal zulässige Längenabweichung $MPE_E$, berechnet nach der Formel A + L/B, wobei L die jeweilige Messlänge ist. Die ermittelte Längenmessabweichung $E_L$, bezeichnet mit der Kurve 6, muss innerhalb der Kurven 7 liegen, um die Spezifikation zu erfüllen. Für die Rechtwinkligkeitsabweichung R gilt folgender Zusammenhang:

$$R = \arctan(dL/L)\ \sin W \cos W$$

mit

     R = Rechtwinkligkeitsabweichung
     dL = Längenabweichung
     L = gemessene Länge des Endmaßes
     W = Winkel zwischen Endmaß und KMG-Achse

(vgl. Buch "Genau messen mit Koordinatenmeßgeräten" von Hans-Gerd Pressel, expert Verlag; ISBN 3-8169-1434-9. Seite 23 - 28)

Der Winkel W zur KMG-Achse ist in diesem Fall der Winkel zwischen dem Endmaß und der Y-Achse und die Rechtwinkligkeitsabweichung ist bei der in Fig. 2 gezeigten Anordnung des Endmaßes 1 die Abweichung yWz, d.h. die Verkippung der Z-Achse zur Y-Achse. Da der Winkel W konstant ist, hängt die Rechtswinkligkeitsabweichung von dem Verhältnis dL/L ab. Bei den Endmaßlängen 3 und 3' entspricht das Verhältnis dL/L der Steigung der Geraden 8, die in der Fig. 1 vom Anfang der Endmaßlänge 3 bzw. 3' bis zum Ende der Endmaßlänge 3 bzw. 3' eingezeichnet ist. Entsprechendes gilt für die anderen gemessenen Endmaßlängen 4, 4' und 5, 5', bei denen die Steigung dL/L durch die Geraden 9 bzw. 10 angezeigt ist. Wie aus der Fig. 1 ersichtlich, erhält man für drei verschiedene gemessene Endmaßlängen unterschiedliche Verhältnisse dL/L bzw. unterschiedliche Steigungen der Geraden 8, 9 und 10. Gemäß der oben dargestellten Formel erhält man damit für verschiedene gemessene Endmaßlängen unterschiedliche Rechtwinkligkeitsabweichungen R. Es wird also in diesem Beispiel je nach dem über welche Messlänge die Rechtwinkligkeit ermittelt wird, eine andere Rechtwinkligkeitsabweichung erhalten. Die in Abbildung 1 dargestellte Stufenendmaßmessung ist nur ein Ausschnitt im Messbereich. D.h. der Rechtwinkligkeitsfehler kann an anderen Messorten abweichen, und beispielsweise noch größer sein.

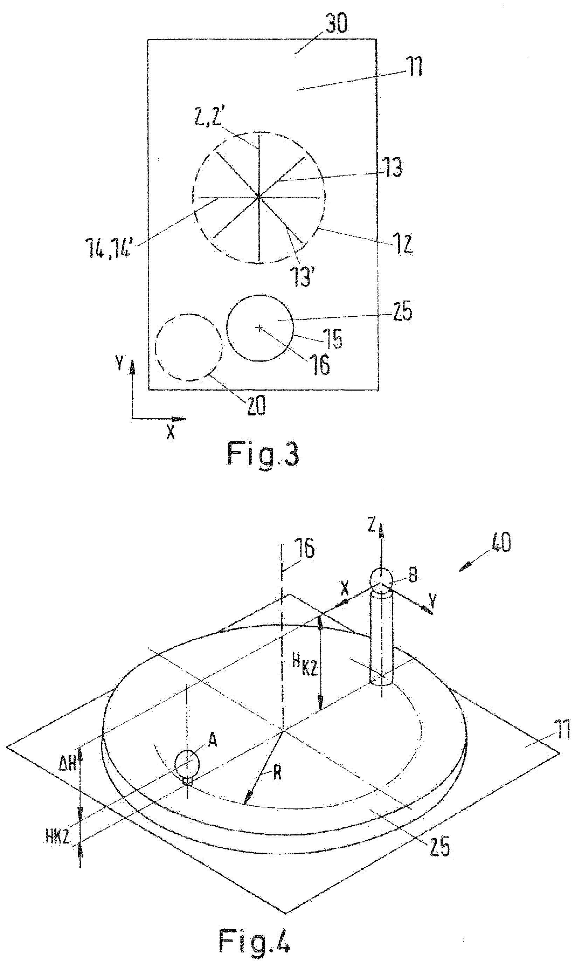

Bei der KMG-Abnahme wird die Längenabweichung so ermittelt, dass sich die Längen Restfehler dL des KMG innerhalb der geforderten Toleranzkurven 7 befinden. In der Regel wird die Längenabweichung über 2/3 des Messbereiches und das ausgehend von der Mitte des Messbereiches bestimmt, wie anhand der Fig. 3 erläutert. Ebenfalls werden dann in einem mittleren Teil-Bereich des Messbereiches die Rechtwinkligkeitsabweichungen für verschiedene Längen L des Endmaßes bestimmt, wobei man, wie oben erläutert, verschiedenen Quotienten dL/L und damit verschiedene Rechtwinkligkeitsabweichungen erhält. Die verschiedenen Rechtwinkligkeitsabweichungen werden dann ausgemittelt und der Mittelwert der Rechtwinkligkeitsabweichungen wird als globale Rechtwinkligkeitsabweichung angenommen. D.h. es wird angenommen, dass der Mittelwert der Rechtwinkligkeitsabweichungen für den gesamten Messbereich gilt. Die Korrekturwerte der globalen Rechtwinkligkeitsabweichung werden in der Steuerung in einem ersten Korrekturfile hinterlegt. Auch andere Gewichtungsmethoden sind denkbar. Bei Geräten mit geringeren Genauigkeitsanforderungen (in der Regel auch größere Genauigkeitsvorgabe $MPE_E$) kann die Rechtwinkligkeitsabweichungen auch nur an einer Länge L des Endmaßes bestimmt werden. Das Endmaß liegt in der Regel in der Messbereichsmitte und es wird nur ein Quotient dL/L gebildet, d.h. nur eine Rechtwinkligkeitsabweichung, ohne Mittelung.

In der Fig. 3 fällt der Blick des Betrachters von oben auf den Messtisch 11 des KMG bzw. auf die X-Y-Ebene. In der Mitte des Messtisches 11 ist ein mittlerer Bereich 12 mit einer gestrichelten Line umrissen.

Der Raum über dem Messtisch 11 bildet einen Gesamtmessbereich 30, hier in der Draufsicht zweidimensional dargestellt. Der Gesamtmessbereich 30 ist in der Draufsicht von den Grenzen des Messtisches umrissen. Es kann aber der Gesamtmessbereich im Querschnitt auch etwas kleiner sein als die Fläche des Messtisches, da Raum zum Verfahren eines Portals benötigt wird, der nicht zur Messung zur Verfügung steht, und weil nicht jeder Ort auf dem Messtisch von einem Messkopf erreichbar ist. Oder die Fig. 3 kann so betrachtet werden, dass nur ein Teil des Messtisches 11 dargestellt ist.

In dem mittleren Bereich 12 wird wie oben erläutert die globale Rechtwinkligkeitsabweichung für den Gesamtmessbereich 30 ermittelt. Dies erfolgt durch Positionierung eines StufenEndmaßes in sechs Positionen, wobei in jeder Position verschiedene Längenabschnitte des Endmaßes gemessen werden. Zur Ermittlung der Rechtwinkligkeitsabweichung yWx wird das Endmaß in die Positionen 13 und 13' gebracht, wobei 13' gegenüber 13 eine um 180° verdrehte Position darstellt. Die Längenmessung erfolgt in der X-Y-Ebene. Zur Ermittlung der Rechtwinkligkeitsabweichung xWz wird das Endmaß in die Positionen 14 und 14' gebracht, wobei 14' gegenüber 14 eine um 180° verdrehte Position darstellt. Die Positionen 14 und 14' stellen Diagonalen in der X-Z-Ebene dar, ebenso wie 13 und 13' Diagonalen in der X-Y-Ebene darstellen. Somit bilden die Positionen 14 und 14' eine gekreuzte Anordnung, was bei der gewählten Betrachtungsrichtung von oben nicht sichtbar ist. Zur Ermittlung der mittleren globalen Rechtwinkligkeitsabweichung yWz (Abweichung zwischen Y-Achse und Z-Achse) wird das Endmaß in die Positionen 2 und 2' gebracht, wobei 2' gegenüber 2 eine um 180° verdrehte Position darstellt. Die Positionen 2 und 2' stellen Diagonalen in der Y-Z-Ebene dar. Die Anordnung 2 ist in der Fig. 2 gezeigt. Bei der in Fig. 3 gewählten Betrachtungsrichtung von oben ist die gekreuzte diagonale Anordnung 2,2' nicht sichtbar. Wie in der Fig. 2 dargestellt, werden je Endmaßpositionen verschiedene Längen des Stufenendmaßes vermessen. Bei der Position 2 sind dies die Längen 3, 4 und 5, bei der Position 2' die Längen 3', 4' und 5'. Aus den Messungen verschiedener Längen des Stufenendmaßes in der Position 2 und 2' werden verschiedene Rechtwinkligkeitsabweichungen yWz erhalten, wie oben erläutert und diese verschiedenen Rechtwinkligkeitsabweichungen werden zu globalen Rechtwinkligkeitsabweichung yWz im Gesamtmessbereich 30 gemittelt. In analoger Weise erhält man aus den Messungen verschiedener Längen des Stufenendmaßes in der Position 13 und 13' verschiedene Rechtwinkligkeitsabweichungen yWx (Abweichung zwischen X-Achse und Y-Achse) und aus den Messungen verschiedener Längen des Stufenendmaßes in der Position 14 und 14' verschiedene Rechtwinkligkeitsabweichungen xWz (Abweichung zwischen X-Achse und Z-Achse), die zur globalen Rechtwinkligkeitsabweichung im Gesamtmessbereich 30 yWx bzw. xWz gemittelt werden.

In der Fig. 3 ist auch ein Drehtisch 25 im Messbereich des KMG gezeigt, wobei sich der Drehtisch im vorderen Messbereich befindet. Der Bereich bzw. Raum 15 über dem Drehtisch, der hier nur zweidimensional dargestellt ist, bildet einen Teilmessbereich 15. Ein weiterer Teilmessbereich 20 ist unten links dargestellt. Der Teilmessbereich 20 ist kein Bereich über einem Drehtisch sondern ein Unterbereich des Gesamtmessbereiches 30. Im Teilmessbereich 20 kann beispielsweise ein Werkstück auf der Basis positioniert werden. Weitere Teilmessbereiche, die nicht dargestellt sind, können vorhanden bzw. definiert sein.

Die Drehachse 16 des Drehtisches 25 steht senkrecht auf der Fläche des Messtisches 11. Am Ort des Drehtisches sind deutliche Differenzen der Rechtwinkligkeitsabweichung von der globalen, hier gemittelten, Rechtwinkligkeitsabweichung des Gesamtmessbereiches 30, vorhanden. Die Differenzen der Rechtwinkligkeitsabweichungen werden im Teilmessbereich 15 über dem Drehtisch 25 über eine zusätzliche Rechtwinkligkeits-Korrektur ermittelt und korrigiert.

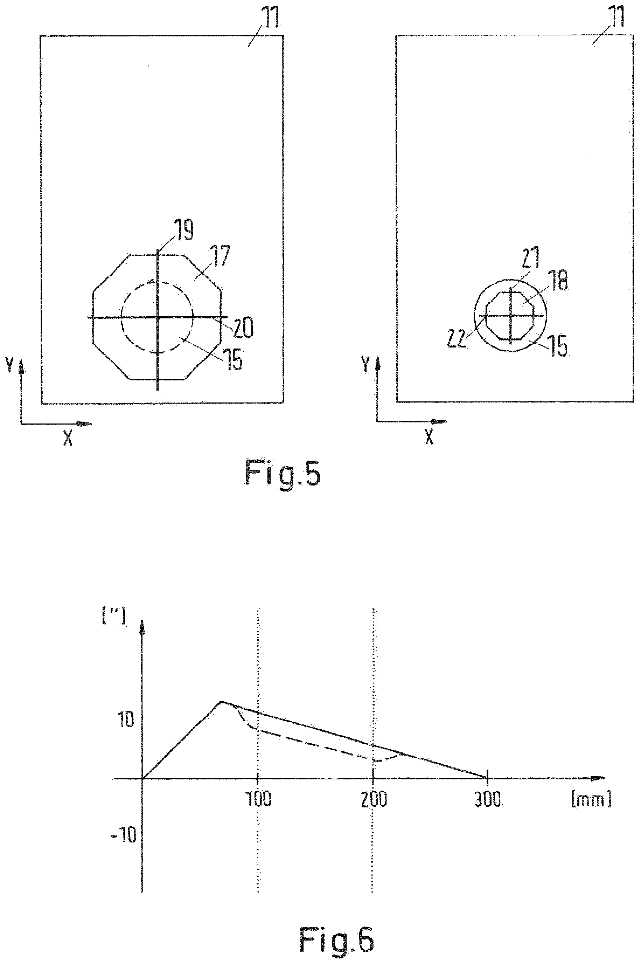

Die Rechtwinkligkeitsabweichung im Teilmessbereich 15 über dem Messtisch kann mit einer Vorrichtung 40 mit zwei kugelförmigen Antastkörpern A, B, ermittelt werden, die in der Fig. 4 gezeigt ist. Die Vorrichtung 40 kann auf dem Drehtisch positioniert werden. Man erhält die Rechtwinkligkeitsabweichungen xWy, yWx, xWz im Teilmessbereich über dem Drehtisch, wogegen die oben erwähnten Rechtwinkligkeitsabweichungen xWy, yWx, xWz die globalen Rechtwinkligkeitsabweichungen sind. Zwei Kugeln A, B, sind mit einem Abstand R, bezogen auf den Kugelmittelpunkt, von der Drehachse 16 des Drehtisches angeordnet. Außerdem sind die Kugeln A, B so angeordnet, dass sie in Richtung der Drehachse 16 einen bezogen auf die Kugelmittelpunkte einen Abstand ΔH aufweisen und eine Verbindungslinie zwischen den beiden Kugeln die Drehachse 16 in etwa schneidet. Man erhält durch Vermessung der Anordnung der Kugeln A, B in verschiedenen Drehpositionen des Drehtisches rechnerisch die Rechtwinkligkeitsabweichungen xWz , yWz, yWx am Ort des Drehtisches, wie in WO02090879A2, insbesondere auf den Seiten 17-22 unter Bezugnahme auf die dortigen Figuren 6,7, und 8, erläutert.

Die Rechtwinkligkeitsabweichungen für den Drehtisch 25 werden am Ort des Drehtisches bestimmt. Bis zu einem gewissen Toleranzbereich, welcher vorgegeben und überwacht werden kann, beispielsweise durch die KMG Steuerung, kann der Ort variieren.

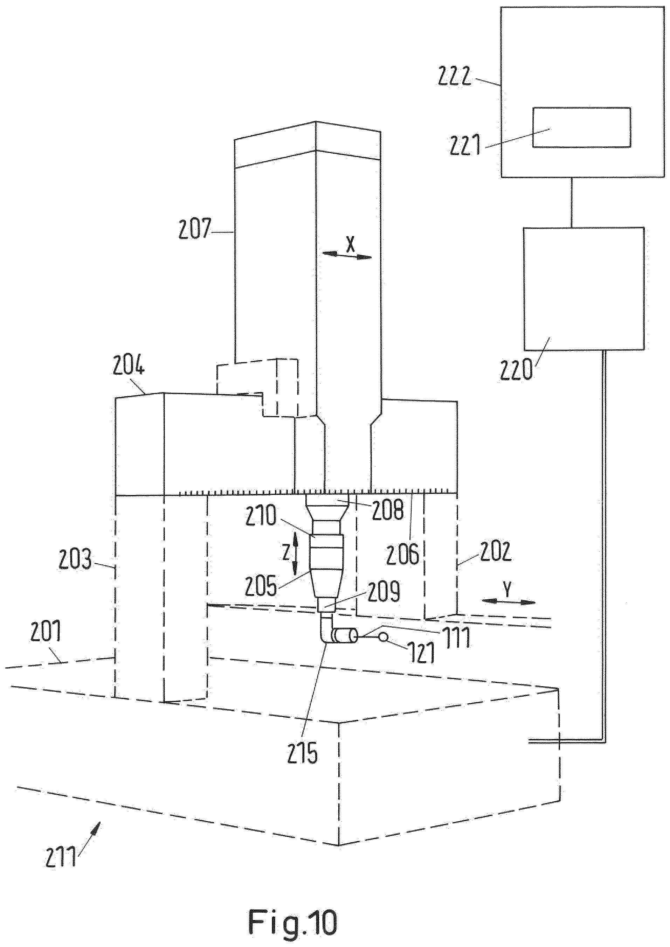

Die Rechtwinkligkeitsabweichung im Teilmessbereich 20, oder einem anderen Teilmessbereich, kann mit einem Endmaß ermittelt werden, das im Teilmessbereich 20, oder einem anderen Teilmessbereich, in verschiedenen Orientierungen positioniert wird, genauso wie oben für den Bereich 12 beschrieben. Die Rechtwinkligkeitsabweichung im Teilmessbereich 20, oder einem anderen Teilmessbereich, kann alternativ auch mit einer zu Fig. 4 analogen Vorrichtung ermittelt werden, wenn die Kugeln A, B um eine Achse 16, die in diesem Fall keine Drehtischachse ist, drehbar gelagert sind. Die Vorrichtung kann einen Fuß aufweisen und eine um eine Drehachse 16 drehbare Platte, wie in WO02090879A2 mit Bezug auf die dortige Fig. 10 beschrieben. Man erhält durch Vermessung der Anordnung der Kugeln A, B in verschiedenen Drehpositionen rechnerisch die Rechtwinkligkeitsabweichungen xWz , yWz, yWx im Teilmessbereich 20, wie in WO02090879A2, insbesondere auf den Seiten 22-25 unter Bezugnahme auf die dortige Figur 10, erläutert.

Die Rechtwinkligkeitsabweichungen für den Teilmessbereich 20 werden am Ort des Teilmessbereiches 20 bestimmt. Bis zu einem gewissen Toleranzbereich, welcher vorgegeben und überwacht werden kann, beispielsweise durch die KMG Steuerung, kann der Ort variieren.

Wie erwähnt, werden die Korrekturwerte der globalen Rechtwinkligkeitsabweichung, d.h. die für den Gesamtmessbereich 30 gültigen Werte, in der Steuerung des KMG in einem ersten Korrekturfile hinterlegt.

Die Korrekturwerte der lokalen Rechtwinkligkeitsabweichung, die für den Teilmessbereich 15 über dem Drehtisch 25 gültig sind, werden in der Steuerung in einem zweiten Korrekturfile hinterlegt oder im selben File, z.B. in einer anderen Variable, wobei nachfolgend die Variante mit einem zweiten File beschrieben wird. Mit dem zweiten File können die Rechtwinkligkeitsabweichungen im Teilmessbereich 15 über dem Drehtisch minimiert werden. Es werden die Korrekturdaten aus dem zweiten File zugrunde gelegt wenn im Teilmessbereich 15 über dem Drehtisch gemessen wird und das erste File wird deaktiviert. Vorzugsweise wird die Korrektur aus dem zweiten File nur dann aktiviert wenn mit aktivem Drehtisch gemessen wird. Im Prüfplan des KMG wird der Drehtisch aktiviert. D.h. der Anwender gibt über den Prüfplan an, ob im Teilmessbereich 15 über dem Drehtisch gemessen wird, z.B. wenn ein auf dem Drehtisch positioniertes Werkstück vermessen wird, oder ob neben dem Drehtisch gemessen wird, z.B. wenn ein Werkstück, das auf der Basis positioniert ist, vermessen wird.

In analoger Weise wie für den Teilmessbereich über dem Drehtisch kann das Verfahren auch für den Teilmessbereich 20 durchgeführt werden. Die Korrekturwerte der lokalen Rechtwinkligkeitsabweichung in dem Teilmessbereich 20 können in einem Korrekturfile hinterlegt werden, das ein zweites Korrekturfile sein kann oder ein drittes Korrekturfile, wenn beispielsweise das zweite Korrekturfile bereits ein Korrekturfile für den Teilmessbereich 15 über dem Drehtisch 25 ist.

In einer anderen Variante (Variante 2) der Korrekturrechnung wird eine Differenzbildung vorgenommen. Die globale Rechtwinkligkeitsabweichung, ermittelt im Bereich 12 für den Gesamtmessbereich 30 wird in einem ersten Korrekturfile hinterlegt. Die lokale Rechtwinkligkeitsabweichung für den Teilmessbereich 15 wird ermittelt wie oben angegeben. Dann wird eine Differenz zwischen den lokalen Rechtwinkligkeitsabweichungswerten und den globalen Rechtwinkligkeitsabweichungswerten vorgenommen und in einem zweiten Korrekturfile hinterlegt, oder im selben File, z.B. in einer anderen Variable, wobei nachfolgend die Variante mit einem zweiten File beschrieben wird. Differenzwerte werden nachfolgend mit dem Zeichen "Δ" gekennzeichnet. Aus der globalen Rechtwinkligkeitsabweichung und der lokalen Rechtwinkligkeitsabweichung, ermittelt im Teilmessbereich 15 über dem Drehtisch 25 kann also eine Änderung bzw. Differenz der Rechtwinkligkeitsabweichung zwischen dem Gesamtmessbereich 30 (ermittelt im Bereich 12) und dem Teilmessbereich 15 ermittelt und im zweiten File hinterlegt werden. Wenn im Teilmessbereich 15 über dem Drehtisch 25 im Messbetrieb gemessen wird, kann die ermittelte Rechtwinkligkeitsabweichungsdifferenz (zweites File) zusätzlich zur globalen Rechtwinkligkeitsabweichung, die für den Gesamtmessbereich 30 gilt, aktiviert werden, sodass das zweite Korrekturfile zusätzlich zum ersten Korrekturfile aktiviert wird. Die Differenz der Rechtwinkligkeitsabweichungen wird durch Aktivierung des zweiten Files berücksichtigt und zur globalen Rechtwinkligkeitsabweichung addiert oder, je nach Vorzeichen, davon subtrahiert. D.h. bei Messungen auf dem Drehtisch 25 sind beide Korrekturfiles aktiv.

In analoger Weise wie für einen Drehtisch kann die Variante 2 für den Teilmessbereich 20 durchgeführt werden. Aus der globalen Rechtwinkligkeitsabweichung und der lokalen Rechtwinkligkeitsabweichung, ermittelt im Teilmessbereich 20, kann also eine Änderung bzw. Differenz der Rechtwinkligkeitsabweichung zwischen dem Gesamtmessbereich 30 (ermittelt im Bereich 12) und dem Teilmessbereich 20 ermittelt und in einem zweiten File hinterlegt werden, oder einem dritten File, wenn in dem zweiten File bereits Daten zu dem Drehtisch hinterlegt sind.

Der Anwender kann ein Werkstück mit einem zuvor festgelegten Prüfplan vermessen. Wenn dabei Positionen des Messkopfs oder Sensors außerhalb des Toleranzbereiches auftreten, gibt die Steuerung eine Fehlermeldung aus, weil die ortsabhängige Rechtwinkligkeitsabweichung in diesem Bereich nicht gültig ist. Dann wird die ortsabhängige Rechtwinkligkeitsabweichung z.B. mit einem Prüfkörper nach Fig.4 erneut bestimmt.

Für beide oben genannten Varianten gilt bei Verwendung eines Drehtisches: Die Daten betreffend die lokale Rechtwinkligkeitsabweichung, also beispielsweise die Daten für das zweite File, müssen für KMG mit fest eingebautem Drehtisch 25 nur einmalig ermittelt werden. Für KMG mit einem verschiebbaren Drehtisch wird diese Korrektur vorzugsweise immer dann neu ermittelt, wenn die Position des Drehtisches verändert wird. Hier wird eine Positionsüberprüfung vorgeschlagen.

Eine einmal ermittelte lokale Rechtwinkligkeitsabweichung, die für einen bestimmten Teilmessbereich gültig ist, kann gespeichert werden, beispielsweise in der Steuerung des KMG. Wird später ein Drehtisch wieder in diesen Teilmessbereich gestellt, oder wird ein Werkstück in diesen Teilmessbereich gestellt, ist eine erneute Ermittlung der Rechtwinkligkeitsabweichung nicht erforderlich. Es können die Informationen zu der zuvor bereits ermittelten Rechtwinkligkeitsabweichung genutzt werden. Wird die Lage des Drehtisches innerhalb des Teilmessbereiches, gegebenenfalls unter Berücksichtigung eines Toleranzbereiches, nicht eingehalten, so kann ein Hinweis durch den Messrechner erfolgen, dass die Rechtwinkligkeitsabweichung am Ort des Drehtisches neu ermittelt werden muss. Mittels einer in Fig. 4 gezeigten Vorrichtung 40 kann die Lage der Drehtischachse ermittelt werden und bei Bedarf auch die Rechtwinkligkeitsabweichung am Ort des Drehtisches neu ermittelt werden.

In einem Rechner kann ein Messplan vorgesehen sein, der einen oder mehrere Teilmessbereiche enthält, für den/die bereits Daten zur Rechtwinkligkeitsabweichung in der Steuerung hinterlegt sind. Veranlasst durch den Rechner können die bereits in der Steuerung hinterlegten Korrekturdaten aktiviert werden, wenn in dem betreffenden Teilmessbereich gemessen wird. Im Lauf der Betriebszeit des KMG können nach und nach verschiedene lokale Rechtwinkligkeitsabweichungen im globalen Messvolumen ermittelt und gespeichert werden. Die Datenstrukturen sind dann so eingerichtet, dass sie mehrere lokale Rechtwinkligkeitsabweichungen verwalten können.

Muss die globale Rechtwinkligkeitsabweichung des KMG neu ermittelt werden, z.B. nach einem Luftlagertausch, so müssen auch die lokalen Rechtwinkligkeitsbweichungen neu ermittelt werden.

In der Tabelle 1 wird, unter Anwendung der oben dargestellten Variante 2, anhand von angenommenen Differenzen der Rechtwinkligkeitsabweichungen die Auswirkung auf die Abweichungen FR, FT und FA (maximal erlaubte Grenzwerte MPE$_{FR}$, MPE$_{FT}$, MPE$_{FA}$) dargestellt. Werden die Differenzen der Rechtwinkligkeitsabweichungen durch das beschriebene Verfahren minimiert, so verbessern sich die Abweichungen FR, FT und FA. In der Tabelle 1 sind Simulationswerte von Differenzen der Rechtwinkligkeitsabweichungen angegeben. Das vorangestellte Delta-Zeichen gibt jeweils an, dass es sich um die Differenz handelt. Die Tabelle 1 gilt für ein KMG mit den angegebenen Rechtwinkligkeitsabweichungen in Winkelsekunden, und einer Drehtischachse, die mit der Einkugelmethode bestimmt worden ist.

Tabelle 1: Auswirkungen der Differenzen der Rechtwinkligkeitsabweichungen zwischen dem globalen Messbereich und dem Teilmessbereich auf die Abweichungen FR, FT, FA

| $\Delta$xWz | $\Delta$yWx | $\Delta$yWz | FR | FT | FA |
|---|---|---|---|---|---|
| 0,2 | 0 | 0 | 0,4 | 0,4 | 0 |
| 0 | 0,2 | 0 | 0,2 | 0,2 | 0 |
| 0 | 0 | 0,2 | 0,4 | 0,4 | 0 |
| 0,2 | 0 | 0,2 | 0,56 | 0,56 | 0 |
| 0,2 | 0,2 | 0,2 | 0,58 | 0,60 | 0 |

Anhand der Fig. 5 ist eine weitere Optimierung des Verfahrens dargestellt. Die Art und die Vorrichtung zur Bestimmung der Rechtwinkligkeitsabweichung im Teilmessbereich 15 über dem Drehtisch 25 werden an die Größe des Werkstücks angepasst. In Fig. 5 wird ein Beispiel zur Bestimmung der Rechtwinkligkeitsabweichung an einem großen Werkstück 17 mit einer Werkstückmasse im Vergleich zu einem kleinen Werkstück 18 mit einer im Vergleich dazu kleineren Werkstückmasse dargestellt. Die Bestimmung der Rechtwinkligkeitsabweichung erfolgt mit einem Testobjekt, das die gleiche oder eine ähnliche Dimensionierung aufweist, wie die auf dem Drehtisch zu vermessenden Werkstücke 17 bzw. 18 und/oder die gleiche oder eine ähnliche Masse aufweist, wie die auf dem Drehtisch zu vermessenden Werkstücke. Diese Optimierung kann vom Anwender bei Bedarf durchgeführt werden. Hierzu kann der Anwender eine bzw. mehrere Vorrichtungen 40 nach dem in Fig. 4 dargestellten Aufbau mit einem oder mehreren Kugelpaaren A, B einsetzen, wobei an der Vorrichtung Zusatzmassen angebracht sein können. In Tabelle 2 werden hierzu Vorschläge dargestellt.

Tabelle 2: Position der Testkugeln A, B auf der Vorrichtung 3D-Alpha-Bestimmung

| Nr. | Höhendifferenz $\Delta$H [mm] | Radius R [mm] |
|---|---|---|
| 1 | 100 | 100 |
| 2 | 200 | 200 |
| 3 | 400 | 200 |
| 4 | 400 | 400 |
| 5 | 800 | 800 |
| ... | ... | ... |

Die Dimensionen $\Delta$H und R werden jeweils an die Größe des Werkstücks angepasst. Statt einer Testobjekts 40 mit zwei Kugeln A, B, wie in Fig. 4 dargestellt, können auch Endmaße 19, 20, 21, 22 zur Bestimmung der Rechtwinkligkeitsabweichung am Ort des Drehtisches verwendet werden, mit Längen, die auf die Dimensionen der Werkstücke 17, 18 angepasst sind. Bei hohen Werkstücken 17, 18 sind die Endmaße 19, 20, 21, 22 vorzugsweise entlang der Raumdiagonale durch das Werkstück ausgerichtet. Das Endmaß 19 in Fig. 5 links kann beispielsweise in einer Lage positioniert werden wie in Fig. 2 rechts gezeigt, ebenso das Endmaß 21 in Fig. 5 links (jeweils in Y-Z-Ebene). Die Endmaße und Werkstücke werden nicht gleichzeitig positioniert, sondern nacheinander, die Endmaße zur Bestimmung der Rechtwinkligkeits Abweichung und die Werkstücke im Messbetrieb. Die bildlich als verschiedene Endmaße dargestellten Endmaße 19, 20 können verschiedene Positionen desselben Endmaßes sein. Die bildlich als verschiedene Endmaße dargestellten Endmaße 21, 22 können ebenso verschiedene Positionen desselben Endmaßes sein.

Nachfolgend wird ein weiteres Beispiel gezeigt, in dem ein lokaler Rechtwinkligkeitsfehler korrigiert wird:

Annahme für dieses spezielle Beispiel: Die Abszisse in Fig. 6-8 soll die X-Achse des KMG sein und die Ordinate die Z-Achse. Es soll in diesem Beispiel die Rechtwinkligkeitsabweichung zwischen der Z- und der X-Achse korrigiert werden.

Begriffe:

- Der Rechtwinkligkeitsfehler zwischen der KMG Z- und X-Achse wird mit xWz bezeichnet.
- Die rotatorischen Fehler der KMG X-Achse werden durch einen CAA-Datenfile beschrieben, der für eine Vielzahl von X-Positionen die Korrekturwerte xRy enthält. xRy beschreibt die Rotation der X-Achse um die Y-Achse, für eine Vielzahl von X-Positionen. Zwischen den Positionen wird z.B. linear interpoliert.

Es gilt:

Ein Rechtwinkligkeitsfehler xWz zwischen der X- und der Z-Achse wirkt sich als Offset beim Korrekturwert xRy aus. Wenn das KMG, bei der Aufnahme des xRy-Fehlers einen konstanten Rechtwinkligkeits-Fehler xWz zwischen der X- und Z-Achse aufweist, verschiebt sich die gesamte Korrekturlinie für xRy nach oben oder unten.

Daraus folgt:

Eine lokale, im einem Abschnitt der X-Achse gültige Rechtwinkligkeitsabweichung xWz lässt sich durch lokale Offset-Änderungen der Korrekturlinie xRy beschreiben.

Dies kann z.B. in einem separaten File geschehen. Dieser File enthält dann zunächst Rechteckfunktionen, die sich über die gesamte Länge der X-Achse verteilen. Die Position und Länge des Rechtecks, bezogen auf den X-Wert gibt den Gültigkeitsbereich der lokalen Rechtwinkligkeitsabweichung an. Die Höhe der Rechteckfunktion, die Größe der Rechtwinkligkeits-Änderung. Die Offsetwerte werden bei aktivem lokalen Korrekturfile auf den xRy-Wert addiert. Da die Addition von Rechteckfunktionen Sprünge in der Korrekturlinie erzeugt, werden die Übergänge vorzugsweise verrundet, um Unstetigkeiten zu vermeiden und die Positionsreglung des KMGs mittels des Positionsreglers zu verbessern.

Es ergeben sich folgende Vorteile:

- Es können in einem File mehrere lokale Rechtwinkligkeitsänderungen beschrieben werden.
- Das Umschalten zwischen verschiedenen CAA- Files ist nicht mehr erforderlich,
- Es kann mit oder ohne lokaler Rechtwinkligkeits- Korrektur gearbeitet werden.
- Die lokale Rechtwinkligkeits-Korrektur wird in dieser Ausführungsform nicht auf eine globale Rechtwinkligkeits-Korrektur xWz addiert. Dadurch bleiben die global gültigen Rechtwinkligkeits-Korrekturen sauber getrennt von den lokalen Optimierungen,
- Die Überwachung von Bereichen entfällt, Fehlermeldungen werden vermieden.
- Das Datenhandling wird erleichtert.

Analog funktioniert das Verfahren für die anderen Rechtwinkligkeitsfehler:

- yWz und yRx
- xWy und xRz

Bei anderer Achsenzuordnung in Fig. 6-8 läßt sich eine lokale Rechtwinkligkeitsabweichung xWy durch eine lokale Offset-Änderung der Korrekturlinie xRz beschreiben und eine lokale Rechtwinkligkeitsabweichung yWz durch eine lokale Offset-Änderung der Korrekturlinie yRx.

Das obige Verfahren wird anhand der Figuren 6-8 nochmals konkret erläutert:

In der Fig. 6 ist die Korrekturlinie für den rotatorischen Führungsfehler xRy entlang der Verfahrachse X dargestellt. Der zwischen den senkrechten Abgrenzungen gekennzeichnete Bereich von 100mm bis 200mm soll optimiert werden. Eine globale Rechtwinkligkeitsabweichung, die gleichsam für den gesamten Messbereich angenommen wird, ist nicht berücksichtigt, sodass die Korrekturlinie xRy keine Offsets über den gesamten Bereich enthält. Eine lokale Rechtwinkligkeitsabweichung im Bereich von 100 bis 200 mm entlang der Verfahrachse des KMG wirkt sich als lokaler Offset aus, der durch die gestrichelte Linie dargestellt ist. Die gestrichelte Linie kennzeichnet den lokal richtigeren Rechtwinkligkeits-Fehlerverlauf, der aber von der globalen Rechtwinkligkeits-Fehlerkurve unberücksichtigt bleibt.

Durch die gleichzeitige Einbeziehung bzw. Verrechnung der Abweichung xRy und der lokalen Rechtwinkligkeitsabweichung im Bereich von 100mm bis 200mm in einem CAA-File wird Wechsel zwischen verschieden CAA-Files vermieden.

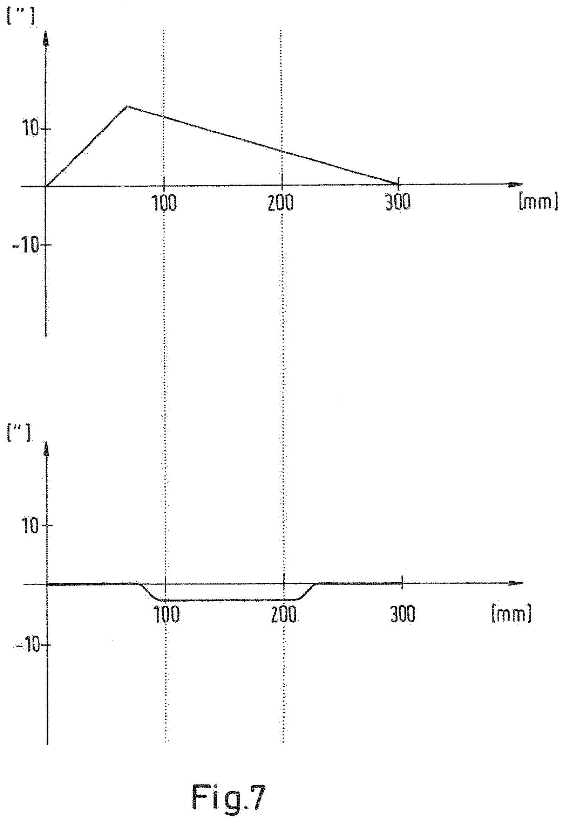

In der Fig. 7, oben, ist die Korrekturlinie für den rotatorischen Führungsfehler xRy ohne Offset dargestellt. In der Figur 7, unten, ist die lokale Rechtwinkligkeitsabweichung im Bereich von 100-200 dargestellt. Die untere Kurve stellt nur die Änderung des Offsets dar und damit indirekt die Rechtwinkligkeits-Änderung. Da sich der Offset außerhalb des lokal zu korrigierenden Bereiches nicht ändert ist dieser dort Null. Es ist aber auch möglich, weitere Rechtwinkligkeitsabweichungen in anderen Bereichen, außerhalb 100-200 mm, zu berücksichtigen. Man würde weitere Offsets in anderen Bereichen erhalten bzw. graphisch dargestellt weitere Rechteckstufen, wobei die Übergänge dazwischen vorzugsweise verrundet werden. Durch die Verrundungen ergeben sich glattere Übergänge der Korrekturlinie entlang der Verfahrachse des KMG, die von dem Positionsregler des KMG besser verarbeitet werden können. Eine Verrundung von Übergängen ist aber nicht in jedem Fall erforderlich. Wenn beispielsweise nur über einem Drehtisch gemessen wird, müssen die Übergänge nicht betrachtet werden. In diesem Fall werden die lokalen Rechtwinkligkeitsabweichungen nur im Bereich des Drehtisches beachtet, ohne dass es auf eine Änderung am Übergang von Drehtisch zu einem anderen Messort ankäme (anders bei Messung entlang einer Verfahrachse).

Durch Kombination beider Linien, Fig. 7 oben und unten, erhält man die Line der Fig. 6 mitsamt Offset zwischen 100 und 200 mm.

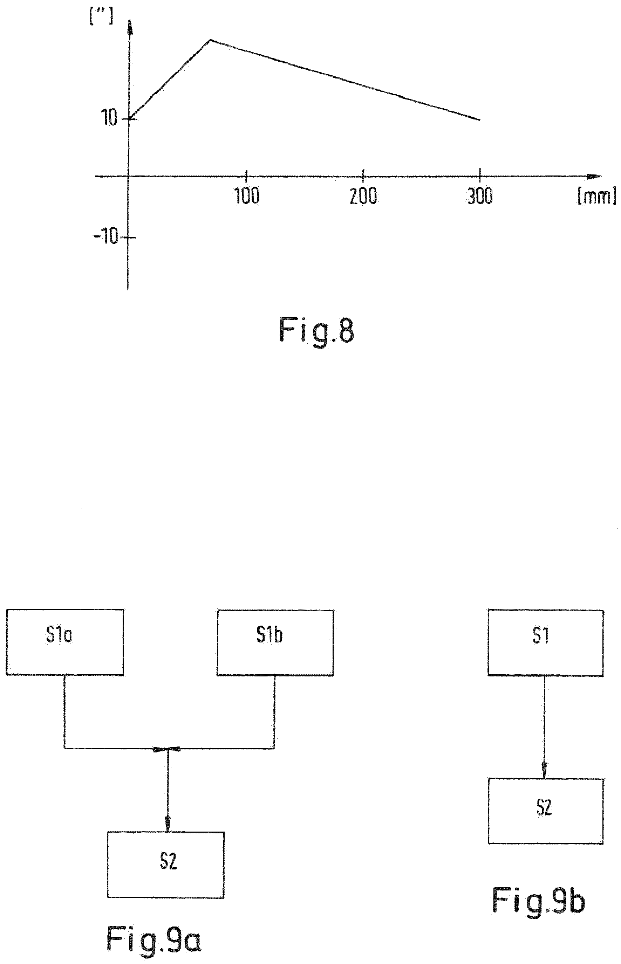

In der Fig. 8 ist die Auswirkung einer globalen Rechtwinkligkeitsabweichung auf die Korrekturlinie xRy dargestellt. Der globale Rechtwinkligkeits-Fehler wirkt sich als Offset auf die Korrekturlinie aus, wie in Fig. 8 gezeigt, ohne dass eine lokale Rechtwinkligkeitsabweichung berücksichtigt ist.

In der vorliegenden Erfindung ist es möglich, die globale Rechtwinkligkeitsabweichung, eine oder mehrere lokale Rechtwinkligkeitsabweichungen und weitere Führungsabweichungen, wie z.B. xRy, in einer Korrekturlinie zu beschreiben. Dazu kann auf die Linie der Fig. 8 noch die lokale Rechtwinkligkeitsabweichung aus Fig. 7, unten, berücksichtigt werden, die sich als Offset im Bereich 100 bis 200 auswirken würde. Es ist jedoch bevorzugt, lokale Rechtwinkligkeitsabweichungen getrennt von globalen Rechtwinkligkeitsabweichungen zu betrachten, wie in Fig. 7 gezeigt. Dadurch bleiben die global gültigen Korrekturen sauber getrennt von den lokalen Optimierungen. Ein solches Verfahren ist bevorzugt gegenüber Verfahren, bei denen globale und lokale Rechtwinkligkeitsabweichungen gleichzeitig berücksichtigt werden. Ein Vorteil entsteht hauptsächlich bei der Datenverwaltung / Datenhandling.

Im Messbetrieb kann das KMG mit oder ohne lokale Rechtwinkligkeits-Optimierungen arbeiten.

Fig. 9a zeigt die Korrektur einer ortsabhängigen Winkelabweichung, wobei mit den Schritten S1a und S1b zwei Untervarianten dargestellt sind, die alternativ oder kumulativ zur Anwendung kommen können.

In Schritt S1a erfolgt die Ermittlung von Werten der ortsabhängigen Winkelabweichung in der Weise, dass für zumindest zwei Teilmessbereiche 15, 20 (s. Fig. 3) des Koordinatenmessgeräts 211 (s. Fig. 10), die lediglich einen Teil eines gesamten Messbereichs 30 (s. Fig. 3) des Koordinatenmessgeräts bilden, jeweils zumindest ein ermittelter Wert erhalten wird, wobei sich für verschiedene Teilmessbereiche 15, 20 des Koordinatenmessgeräts ermittelte Werte der ortsabhängigen Winkelabweichung unterscheiden. Die Winkelabweichung ist insbesondere eine Rechtwinkligkeitsabweichung. Die Ermittlung der Rechtwinkligkeitsabweichung in einem Gesamtmessbereich oder einem Teilmessbereich wurde anhand der Fig. 1-3 erläutert.

In Schritt S1b erfolgt die die Ermittlung von Werten der ortsabhängigen Winkelabweichung in der Weise, dass für zumindest einen Teilmessbereich 15 (s. Fig. 3) ein ermittelter Wert erhalten wird und für einen Gesamtmessbereich 30 (s. Fig. 3) des Koordinatenmessgerätes 211 zumindest ein Wert der Winkelabweichung ermittelt wird, wobei sich der zumindest eine ermittelte Wert für einen Teilmessbereich 15 des Koordinatenmessgeräts von dem zumindest einen Wert für den Gesamtmessbereich 30 unterscheidet. Die Ermittlung der Rechtwinkligkeitsabweichung in einem Gesamtmessbereich oder einem Teilmessbereich wurde anhand der Fig. 1-3 erläutert.

In Schritt S2 erfolgt dann, unter Verwendung der Informationen aus Schritt S1 a und/oder Schritt S1b, die Korrektur der ortsabhängigen Winkelabweichung in einem Teilmessbereich 15 oder mehreren Teilmessbereichen 15, 20 des Koordinatenmessgeräts 211, für den/die zumindest ein ermittelter Wert der ortsabhängigen Winkelabweichung erhalten wurde. Die Korrektur kann mit einer im allgemeinen Beschreibungsteil genannten und in Fig. 10 dargestellten Korrektureinrichtung 221 erfolgen. Die Korrektur kann insbesondere im Messbetrieb, bei Vermessung eines Werkstücks, erfolgen, beispielsweise bei Messung eines Werkstücks auf einem Drehtisch 25 (s. Fig. 3), wobei der Teilmessbereich 15 der Messbereich über dem Drehtisch 25 ist.

Fig. 9b zeigt die Korrektur einer temperaturabhängigen Winkelabweichung. In Schritt S1 erfolgt die die Ermittlung von Werten der temperaturabhängigen Winkelabweichung bei mindestens zwei verschiedenen Temperaturen in der Weise, dass ermittelte Werte der temperaturabhängigen Winkelabweichung in einem Temperaturbereich erhalten werden und/oder Informationen zur Korrektur der temperaturabhängigen Winkelabweichung in einem Temperaturbereich erhalten werden. Die Ermittlung einer Rechtwinkligkeitsabweichung wurde anhand der Fig. 1-3 erläutert, wobei in dieser Verfahrensvariante verschiedene Umgebungstemperaturen eingestellt werden. In Schritt S2 erfolgt dann, unter Verwendung der Informationen aus Schritt S1, die Korrektur der temperaturabhängigen Winkelabweichung. Die Korrektur kann mit einer im allgemeinen Beschreibungsteil genannten und in Fig. 10 dargestellten Korrektureinrichtung 221 erfolgen. Die Korrektur kann insbesondere im Messbetrieb, bei Vermessung eines Werkstücks, erfolgen.

Fig. 9b zeigt alternativ zur Korrektur einer temperaturabhängigen Winkelabweichung auch die Korrektur einer Beladungsmasse-abhängigen Winkelabweichung. In Schritt S1 von Fig. 9b erfolgt die Ermittlung von Werten der Beladungsmasse-abhängigen Winkelabweichung bei Beladung des Koordinatenmessgeräts mit mindestens zwei verschiedenen Beladungs-Massen in der Weise, dass ermittelte Werte der Beladungsmasse-abhängigen Winkelabweichung in einem Bereich von Beladungs-Massen erhalten werden und/oder Informationen zur Korrektur der Beladungsmasse-abhängigen Winkelabweichung in einem Temperaturbereich erhalten werden. Die Ermittlung einer Rechtwinkligkeitsabweichung wurde anhand der Fig. 1-3 erläutert, wobei in dieser Verfahrensvariante beispielsweise verschiedene Beladungsmassen auf die Basis des KMG oder einen Drehtisch aufgebracht werden. Beispielsweise wird ein Drehtisch 25 (Fig. 3) mit verschiedenen Werkstücken 17, 18 (s. Fig. 5) mit jeweils verschiedener Werkstückmasse beladen und jeweils die Rechtwinkligkeitsabweichung ermittelt. In Schritt S2 erfolgt dann die Korrektur der Beladungsmasse-abhängigen Winkelabweichung unter Verwendung eines der ermittelten Werte und/oder der erhaltenen Informationen aus Schritt S1. Wiederum kann die Korrektur mit einer im allgemeinen Beschreibungsteil genannten und in Fig. 10 dargestellten Korrektureinrichtung 221 erfolgen. Die Korrektur kann insbesondere im Messbetrieb, bei Vermessung eines Werkstücks, erfolgen.

Das in Fig. 10 dargestellte Koordinatenmessgerät (KMG) 211 in Portalbauweise weist einen Messtisch 201 auf, über dem Säulen 202, 203 in Y-Richtung eines kartesischen Koordinatensystems beweglich angeordnet sind. Der Messtisch 201 entspricht dem Messtisch 11 in Fig. 3, der dort in einer Ansicht von oben dargestellt ist. Die Säulen 202, 203 bilden zusammen mit einem Querträger 204 ein Portal des KMG 211. Der Querträger 204 ist an seinen gegenüberliegenden Enden mit den Säulen 202 bzw. 203 verbunden. Nicht näher dargestellte Elektromotoren verursachen die Linearbewegung der Säulen 202, 203 in Y-Richtung, entlang der Y-Bewegungs-Achse. Dabei ist z. B. jeder der beiden Säulen 202, 203 ein Elektromotor zugeordnet. Der Querträger 204 ist mit einem Querschlitten 207 kombiniert, welcher luftgelagert entlang dem Querträger 204 in X-Richtung des kartesischen Koordinatensystems beweglich ist. Die momentane Position des Querschlittens 207 relativ zu dem Querträger 204 kann anhand einer Maßstabsteilung 206 festgestellt werden. Die Bewegung des Querträgers 204 in X-Richtung, d.h. entlang der X-Bewegungs-Achse, wird durch einen weiteren Elektromotor angetrieben. An dem Querschlitten 207 ist eine in vertikaler Richtung bewegliche Pinole 208 gelagert, die an ihrem unteren Ende über eine Montageeinrichtung 210 und eine Drehvorrichtung 205 mit einer Koordinatenmesseinrichtung 209 verbunden ist. Die Koordinatenmesseinrichtung 209 weist ist einen abgewinkelten Tastkopf 215 auf, an dem ein Taststift 111 mit Tastkugel 121 abnehmbar angeordnet ist. Die Koordinatenmesseinrichtung 209 kann angetrieben durch einen weiteren Elektromotor relativ zu dem Querschlitten 207 in Z-Richtung, entlang der Z-Bewegungs-Achse, des kartesischen Koordinatensystems bewegt werden. Durch die Elektromotoren des KMG kann der Tastkopf 209 in dem Bereich unterhalb des Querträgers 204 in nahezu beliebige Positionen bewegt werden. Ferner kann die Drehvorrichtung 205 den Tastkopf 215 um die Z-Achse drehen, sodass der Taststift 111 in unterschiedliche Richtungen ausgerichtet werden kann.

Dargestellt ist ferner eine Steuerung 220, die die Bewegung der beweglichen Teile des KMG entlang der Bewegungs-Achsen steuert. Ferner weist das Koordinatenmessgerät 211 eine Korrektureinrichtung 221 auf, die ausgestaltet ist, die Korrektur der Winkelabweichung und gegebenenfalls translatorischer und/oder rotatorischer Führungsabweichungen vorzunehmen. Die Korrektureinrichtung 221 ist Teil eines Messrechners 222 bzw. der Messrechner 222 übernimmt die Aufgabe der Korrektureinrichtung. Der Messrechner 222 ist mit der Steuerung 220 zum Austausch von Informationen, wie zum Beispiel Befehlen und Statusmeldungen, verbunden. Der Rechner 222 oder die Steuerung 220 kann einen nicht näher dargestellten Speicher aufweisen, in dem

- für zumindest zwei Teilmessbereiche des Koordinatenmessgeräts jeweils zumindest ein Wert einer Winkelabweichung, oder für zumindest einen Teilmessbereich des Koordinatenmessgeräts und einen Gesamtmessbereich des Koordinatenmessgeräts jeweils zumindest ein Wert einer Winkelabweichung gespeichert sind, und/oder
- für zumindest zwei Temperaturen jeweils zumindest ein Wert einer Winkelabweichung, und/oder Informationen zur Korrektur einer temperaturabhängigen Winkelabweichung gespeichert sind, und/oder
- für zumindest zwei Beladungsmassen jeweils zumindest ein Wert einer Winkelabweichung, und/oder Informationen zur Korrektur einer Beladungsmasse-abhängigen Winkelabweichung gespeichert sind

Die Korrektureinrichtung 221 greift zur Korrektur auf den Speicher zu.

**Patentansprüche**

1. Verfahren zur Korrektur zumindest einer Winkelabweichung eines realen Winkels von einem idealen Winkel zwischen Bewegungs-Achsen (X, Y, Z) eines Koordinatenmessgeräts (211), wobei die Winkelabweichung ortsabhängig und/oder temperaturabhängig und/oder von einer Beladungsmasse abhängig ist, umfassend die Schritte

    a-1) Ermittlung von Werten der ortsabhängigen Winkelabweichung in der Weise, dass

        i) für zumindest zwei Teilmessbereiche (15, 20) des Koordinatenmessgeräts, die lediglich einen Teil eines gesamten Messbereichs (30) des Koordinatenmessgeräts bilden, jeweils zumindest ein Wert ermittelt wird, wobei sich für verschiedene Teilmessbereiche des Koordinatenmessgeräts ermittelte Werte der ortsabhängigen Winkelabweichung unterscheiden oder unterscheiden können, und/oder
        ii) für zumindest einen Teilmessbereich (15) zumindest ein Wert ermittelt wird und für einen Gesamtmessbereich (30) des Koordinatenmessgerätes zumindest ein Wert der Winkelabweichung ermittelt wird, wobei sich der zumindest eine ermittelte Wert für einen Teilmessbereich des Koordinatenmessgeräts von dem zumindest einen Wert für den Gesamtmessbereich unterscheidet oder unterscheiden kann, und

    b-1) Korrektur der ortsabhängigen Winkelabweichung in einem oder mehreren Teilmessbereichen (15, 20) des Koordinatenmessgeräts, für den/die zumindest ein Wert der ortsabhängigen Winkelabweichung ermittelt wurde, unter Verwendung des zumindest einen ermittelten Werts,

und/oder die Schritte

    a-2) Ermittlung von Werten der temperaturabhängigen Winkelabweichung bei mindestens zwei verschiedenen Temperaturen in der Weise, dass Werte der temperaturabhängigen Winkelabweichung in einem Temperaturbereich ermittelt werden und/oder Informationen zur Korrektur der temperaturabhängigen Winkelabweichung in einem Temperaturbereich erhalten werden,
    b-2) Korrektur der temperaturabhängigen Winkelabweichung unter Verwendung eines der ermittelten Werte und/oder der erhaltenen Informationen aus Schritt a-2),

und/oder die Schritte

    a-3) Ermittlung von einem Wert oder von mehreren Werten der Beladungsmasse-abhängigen Winkelabweichung bei Beladung des Koordinatenmessgeräts mit einer Beladungsmasse oder mit mindestens zwei verschiedenen Beladungs-Massen (17, 18) in der Weise, dass ein Wert für die Beladungsmasse-abhängige Winkelabweichung oder Werte der Beladungsmasse-abhängigen Winkelabweichung in einem Bereich von Beladungs-Massen ermittelt werden und/oder Informationen zur Korrektur der Beladungsmasse-abhängigen Winkelabweichung erhalten werden, und
    b-3) Korrektur der Beladungsmasse-abhängigen Winkelabweichung unter Verwendung eines der ermittelten Werte und/oder der erhaltenen Informationen aus Schritt a-3).

2. Verfahren nach Anspruch 1, bei dem zumindest einer der Teilmessbereiche (15, 20) ein zusammenhängender linearer Bereich, ein zusammenhängender flächiger Bereich oder ein zusammenhängender Volumenbereich ist.

3. Verfahren nach Anspruch 1 oder 2, bei dem die Winkelabweichung in einem Teilmessbereich zusammen mit einer rotatorischen Führungs-Abweichung einer realen Bewegung von Teilen des Koordinatenmessgeräts entlang einer Bewegungs-Achse von einer idealen Bewegung der Teile des Koordinatenmessgeräts entlang der Bewegungs-Achse berücksichtigt wird, indem eine Korrekturfunktion zur Korrektur der Winkelabweichung und der Achsen-Abweichung gebildet wird, und zur Bildung der Korrekturfunktion Werte der Winkelabweichung in dem zumindest einen Teilmessbereich und Werte der rotatorischen Führungs-Abweichung verwendet werden.

4. Verfahren nach einem der vorangehenden Ansprüche, wobei bei der Korrektur der ortsabhängigen Winkelabweichung in dem zumindest einen Teilmessbereich eine Differenz zwischen dem zumindest einen Wert der Winkelabweichung für den Gesamtmessbereich (30) und dem zumindest einen Wert der Winkelabweichung für den Teilmessbereich (15) ermittelt wird, und die Differenz bei der Korrektur der Winkelabweichung verwendet wird.

5. Verfahren nach einem der Ansprüche 1-3, wobei bei der Korrektur der ortsabhängigen Winkelabweichung der zumindest ein Wert der Winkelabweichung für den Gesamtmessbereich (30) unberücksichtigt bleibt und der zumindest eine Wert der Winkelabweichung in dem zumindest einen Teilmessbereich (15) bei der Korrektur der Winkelabweichung verwendet wird .

6. Verfahren nach einem der vorangehenden Ansprüche, bei dem einer der Teilmessbereichs (15) in Schritt a-1) i) oder der Teilmessbereich in Schritt a-1) ii) der Messbereich über einem Drehtisch (25) ist.

7. Verfahren nach Anspruch 6, wobei der Drehtisch (25) mit einer Werkstückmasse (17, 18) beladen wird und eine Korrektur der ortsabhängigen Winkelabweichung und eine Korrektur der Beladungsmasse-abhängigen Winkelabweichung durchgeführt wird.

8. Verfahren nach einem der vorangehenden Ansprüche, bei dem der Teilmessbereich (15), in dem der zumindest eine Wert der Winkelabweichung ermittelt wird, die gleiche oder eine ähnliche Dimensionierung aufweist, wie ein zu vermessendes Werkstück (17, 18).

9. Verfahren nach einem der vorangehenden Ansprüche, wobei die Ermittlung des zumindest einen Werts der Winkelabweichung mit einem Testobjekt (19, 20, 21, 22; 40) durchgeführt wird, das an die Größe des zu vermessenden Werkstücks (17, 18) angepasst ist.

10. Verfahren nach einem der vorangehenden Ansprüche, wobei die Ermittlung des zumindest einen Werts der der Winkelabweichung mit einem Testobjekt durchgeführt wird, das an die Masse und/oder Position und/oder Orientierung des zu vermessenden Werkstücks (17, 18) angepasst ist.

11. Verfahren nach einem der vorangehenden Ansprüche, wobei

   - für zumindest zwei Teilmessbereiche (15, 20) des Koordinatenmessgeräts (211) jeweils zumindest ein Wert einer Winkelabweichung, oder für zumindest einen Teilmessbereich (15) des Koordinatenmessgeräts und einen Gesamtmessbereich (30) des Koordinatenmessgeräts jeweils zumindest ein Wert einer Winkelabweichung, und/oder
   - für zumindest zwei Temperaturen jeweils zumindest ein Wert einer Winkelabweichung, und/oder Informationen zur Korrektur einer temperaturabhängigen Winkelabweichung, und/oder
   - für zumindest zwei Beladungsmassen (17, 18) jeweils zumindest ein Wert einer Winkelabweichung, und/oder Informationen zur Korrektur einer Beladungsmasse-abhängigen Winkelabweichung

   in dem Koordinatenmessgerät gespeichert wird/werden und bei der Korrektur der zumindest eine Wert und/oder die Informationen für den betreffenden Teilmessbereich oder Gesamtmessbereich und/oder für die betreffende Temperatur und/oder für die betreffende Beladungsmasse verwendet wird/werden, insbesondere automatisch verwendet wird/werden.

12. Verfahren nach einem der vorangehenden Ansprüche, wobei

   - den Werten der Winkelabweichung oder den Informationen zur Korrektur der Winkelabweichung der Zeitpunkt der Ermittlung der Werte oder der Informationen zugeordnet wird,
   - eine Zeitspanne vom Zeitpunkt der Ermittlung bis zum Zeitpunkt der Korrektur der Winkelabweichung ermittelt wird,
   - der Zeitspanne ein Richtwert zugeordnet wird, wobei der Richtwert eine Information über die Verlässlichkeit und/oder Validität der Werte der Winkelabweichung oder die Validität der Informationen zur Korrektur der Winkelabweichung enthält.

13. Koordinatenmessgerät (211), das zur Durchführung eines Verfahrens nach einem der Ansprüche 1-12 eingerichtet ist, aufweisend eine Korrektureinrichtung (221), die ausgestaltet ist, die Korrektur einer Winkelabweichung durchzuführen.

14. Koordinatenmessgerät nach Anspruch 13, wobei die Korrektureinrichtung (221) dazu ausgestaltet ist,

   - bei Koordinatenmessung in einem Gesamtmessbereich (30) des Koordinatenmessgeräts eine Winkelabweichung unter Verwendung zumindest eines Wertes der Winkelabweichung in dem Gesamtmessbereich (30) zu korrigieren und bei Koordinatenmessung in einem Teilmessbereich (15, 20) des Koordinatenmessgeräts eine Winkelabweichung unter Verwendung zumindest eines Wertes der Winkelabweichung in dem Teilmessbereich (15, 20) zu korrigieren, und/oder

- bei Koordinatenmessung in einem ersten Teilmessbereich (15) des Koordinatenmessgeräts eine Winkelabweichung unter Verwendung zumindest eines Wertes der Winkelabweichung in dem ersten Teilmessbereich (15) zu korrigieren und bei Koordinatenmessung in einem zweiten Teilmessbereich (20) des Koordinatenmessgeräts eine Winkelabweichung unter Verwendung zumindest eines Wertes der Winkelabweichung in dem zweiten Teilmessbereich (20) zu korrigieren, und/oder

- bei Koordinatenmessung bei einer ersten Messtemperatur eine Winkelabweichung unter Verwendung zumindest eines Wertes der Winkelabweichung bei der ersten Messtemperatur zu korrigieren, und bei Koordinatenmessung bei einer zweiten Messtemperatur eine Winkelabweichung unter Verwendung zumindest eines Wertes der Winkelabweichung bei der zweiten Messtemperatur zu korrigieren und/oder

- bei Koordinatenmessung bei Beladung mit einer ersten Masse (17) eine Winkelabweichung unter Verwendung zumindest eines Wertes der Winkelabweichung bei der Beladung mit der ersten Masse (17) zu korrigieren, und bei Koordinatenmessung bei Beladung mit einer zweiten Masse (18) eine Winkelabweichung unter Verwendung zumindest eines Wertes der Winkelabweichung bei der Beladung mit der zweiten Masse (18) zu korrigieren.

15. Koordinatenmessgerät (211) nach einem der Ansprüche 13-14, aufweisend einen Speicher, in dem folgende Informationen gespeichert sind:

- für zumindest zwei Teilmessbereiche (15, 20) des Koordinatenmessgeräts (211) jeweils zumindest ein Wert einer Winkelabweichung, oder für zumindest einen Teilmessbereich (15) des Koordinatenmessgeräts und einen Gesamtmessbereich (30) des Koordinatenmessgeräts jeweils zumindest ein Wert einer Winkelabweichung, und/oder

- für zumindest zwei Temperaturen jeweils zumindest ein Wert einer Winkelabweichung, und/oder Informationen zur Korrektur einer temperaturabhängigen Winkelabweichung,

- für zumindest zwei Beladungsmassen (17, 18) jeweils zumindest ein Wert einer Winkelabweichung, und/oder Informationen zur Korrektur einer Beladungsmasse-abhängigen Winkelabweichung.

**Claims**

1. Method for correcting at least one angular deviation of a real angle from an ideal angle between movement axes (X, Y, Z) with a coordinate measuring machine (211), wherein the angular deviation is location-dependent and/or temperature-dependent and/or dependent on a loading mass, comprising the steps of

a-1) determining values of the location-dependent angular deviation in such a way that

i) in each case at least one value is determined for at least two partial measurement regions (15, 20) of the coordinate measuring machine which form only part of a total measurement region (30) of the coordinate measuring machine, wherein values of the location-dependent angular deviation determined for different partial measurement regions of the coordinate measuring machine differ or can differ, and/or

ii) at least one value is determined for at least one partial measurement region (15) and at least one value of the angular deviation is determined for a total measurement region (30) of the coordinate measuring machine, wherein the at least one determined value for a partial measurement region of the coordinate measuring machine differs or can differ from the at least one value for the total measurement region, and

b-1) correcting the location-dependent angular deviation in one or a plurality of partial measurement regions (15, 20) of the coordinate measuring machine for which at least one value of the location-dependent angular deviation was determined, using the at least one determined value,

and/or the steps of

a-2) determining values of the temperature-dependent angular deviation for at least two different temperatures in such a way that values of the temperature-dependent angular deviation in a temperature range are determined and/or information for correcting the temperature-dependent angular deviation in a temperature range is obtained,

b-2) correcting the temperature-dependent angular deviation using one of the determined values and/or the obtained information from step a-2),

and/or the steps of

a-3) determining one value or a plurality of values of the loading mass-dependent angular deviation upon the loading of the coordinate measuring machine with one loading mass or with at least two different loading masses (17, 18) in such a way that a value for the loading mass-dependent angular deviation or values of the loading mass-dependent angular deviation in a range of loading masses is or are determined and/or information for correcting the loading mass-dependent angular deviation is obtained, and

b-3) correcting the loading mass-dependent angular deviation using one of the determined values and/or the obtained information from step a-3).

2. Method according to Claim 1, wherein at least one of the partial measurement regions (15, 20) is a continuous linear region, a continuous planar region or a continuous volume region.

3. Method according to Claim 1 or 2, wherein the angular deviation in a partial measurement region together with a rotational guidance deviation of a real movement of parts of the coordinate measuring machine along a movement axis from an ideal movement of the parts of the coordinate measuring machine along the movement axis is taken into account by the formation of a correction function for correcting the angular deviation and the axis deviation, and values of the angular deviation in the at least one partial measurement region and values of the rotational guidance deviation are used for forming the correction function.

4. Method according to any of the preceding claims, wherein, when correcting the location-dependent angular deviation in the at least one partial measurement region, a difference between the at least one value of the angular deviation for the total measurement region (30) and the at least one value of the angular deviation for the partial measurement region (15) is determined, and the difference is used when correcting the angular deviation.

5. Method according to any of Claims 1-3, wherein, when correcting the location-dependent angular deviation, the at least one value of the angular deviation for the total measurement region (30) is disregarded and the at least one value of the angular deviation in the at least one partial measurement region (15) is used when correcting the angular deviation.

6. Method according to any of the preceding claims, wherein one of the partial measurement regions (15) in step a-1) i) or the partial measurement region in step a-1) ii) is the measurement region above a rotary table (25).

7. Method according to Claim 6, wherein the rotary table (25) is loaded with a workpiece mass (17, 18) and a correction of the location-dependent angular deviation and correction of the loading mass-dependent angular deviation are carried out.

8. Method according to any of the preceding claims, wherein the partial measurement region (15) in which the at least one value of the angular deviation is determined has a dimensioning the same as or similar to that of a workpiece (17, 18) to be measured.

9. Method according to any of the preceding claims, wherein determining the at least one value of the angular deviation is carried out with a test object (19, 20, 21, 22; 40) adapted to the size of the workpiece (17, 18) to be measured.

10. Method according to any of the preceding claims, wherein determining the at least one value of the the angular deviation is carried out with a test object adapted to the mass and/or position and/or orientation of the workpiece (17, 18) to be measured.

11. Method according to any of the preceding claims, wherein

   - for at least two partial measurement regions (15, 20) of the coordinate measuring machine (211) in each case at least one value of an angular deviation, or for at least one partial measurement region (15) of the coordinate measuring machine and a total measurement region (30) of the coordinate measuring machine in each case at least one value of an angular deviation, and/or
   - for at least two temperatures in each case at least one value of an angular deviation, and/or information for correcting a temperature-dependent angular deviation, and/or
   - for at least two loading masses (17, 18) in each case at least one value of an angular deviation, and/or information for correcting a loading mass-dependent angular deviation

is/are stored in the coordinate measuring machine and the at least one value and/or the information for the relevant partial measurement region or total measurement region and/or for the relevant temperature and/or for the relevant loading mass is/are used, in particular is/are used automatically, in the correction.

12. Method according to any of the preceding claims, wherein

- the point in time of the determination of the values or of the information is assigned to the values of the angular deviation or the information for correcting the angular deviation,

- a time period from the point in time of the determination until the point in time of the correction of the angular deviation is determined,

- a guideline value is assigned to the time period, wherein the guideline value contains information about the reliability and/or validity of the values of the angular deviation or the validity of the information for correcting the angular deviation.

13. Coordinate measuring machine (211) designed for carrying out a method according to any of Claims 1-12, comprising a correction device (221) configured to carry out the correction of an angular deviation.

14. Coordinate measuring machine according to Claim 13, wherein the correction device (221) is configured,

- in the case of coordinate measurement in a total measurement region (30) of the coordinate measuring machine, to correct an angular deviation using at least one value of the angular deviation in the total measurement region (30) and, in the case of coordinate measurement in a partial measurement region (15, 20) of the coordinate measuring machine, to correct an angular deviation using at least one value of the angular deviation in the partial measurement region (15, 20), and/or

- in the case of coordinate measurement in a first partial measurement region (15) of the coordinate measuring machine, to correct an angular deviation using at least one value of the angular deviation in the first partial measurement region (15) and, in the case of coordinate measurement in a second partial measurement region (20) of the coordinate measuring machine, to correct an angular deviation using at least one value of the angular deviation in the second partial measurement region (20), and/or

- in the case of coordinate measurement at a first measurement temperature, to correct an angular deviation using at least one value of the angular deviation at the first measurement temperature, and in the case of coordinate measurement at a second measurement temperature, to correct an angular deviation using at least one value of the angular deviation at the second measurement temperature, and/or

- in the case of coordinate measurement in the case of loading with a first mass (17), to correct an angular deviation using at least one value of the angular deviation in the case of the loading with the first mass (17), and in the case of coordinate measurement in the case of loading with a second mass (18), to correct an angular deviation using at least one value of the angular deviation in the case of the loading with the second mass (18).

15. Coordinate measuring machine (211) according to either of Claims 13 and 14, comprising a memory in which the following information is stored:

- for at least two partial measurement regions (15, 20) of the coordinate measuring machine (211) in each case at least one value of an angular deviation, or for at least one partial measurement region (15) of the coordinate measuring machine and a total measurement region (30) of the coordinate measuring machine in each case at least one value of an angular deviation, and/or

- for at least two temperatures in each case at least one value of an angular deviation, and/or information for correcting a temperature-dependent angular deviation,

- for at least two loading masses (17, 18) in each case at least one value of an angular deviation, and/or information for correcting a loading mass-dependent angular deviation.

## Revendications

1. Procédé de correction d'au moins un écart angulaire d'un angle réel par rapport à un angle idéal entre des axes de déplacement (X, Y, Z) d'un appareil de mesure de coordonnées (211), l'écart angulaire étant dépendant du lieu et/ou dépendant la température et/ou dépendant d'une masse de chargement, comprenant les étapes suivantes :

a-1) détermination de valeurs de l'écart angulaire dépendant du lieu de telle sorte que

i) au moins une valeur est respectivement déterminée pour au moins deux zones de mesure partielles (15, 20) de l'appareil de mesure de coordonnées, lesquelles forment seulement une partie de la zone de mesure totale (30) de l'appareil de mesure de coordonnées, des valeurs de l'écart angulaire dépendant du lieu déterminées pour différentes zones de mesure partielles de l'appareil de mesure de coordonnées étant différentes ou pouvant être différentes, et/ou

ii) au moins une valeur est déterminée pour au moins une zone de mesure partielle (15) et au moins une valeur de l'écart angulaire est déterminée pour une zone de mesure

totale (30) de l'appareil de mesure de coordonnées, l'au moins une valeur déterminée pour une zone de mesure partielle de l'appareil de mesure de coordonnées étant différente ou pouvant être différente de l'au moins une valeur pour la zone de mesure totale, et

b-1) correction de l'écart angulaire dépendant du lieu dans une ou plusieurs zones de mesure partielles (15, 20) de l'appareil de mesure de coordonnées pour laquelle/lesquelles au moins une valeur de l'écart angulaire dépendant du lieu a été déterminée, en utilisant l'au moins une valeur déterminée,

et/ou les étapes suivantes :

a-2) détermination de valeurs de l'écart angulaire dépendant de la température à au moins deux températures différentes de telle sorte que des valeurs de l'écart angulaire dépendant de la température sont déterminées dans une plage de températures et/ou des informations destinées à la correction de l'écart angulaire dépendant de la température dans une plage de températures sont obtenues,
b-2) correction de l'écart angulaire dépendant de la température en utilisant l'une des valeurs déterminées et/ou les informations obtenues à l'étape a-2),

et/ou les étapes suivantes :

a-3) détermination d'une valeur ou de plusieurs valeurs de l'écart angulaire dépendant de la masse de chargement lors du chargement de l'appareil de mesure de coordonnées avec une masse de chargement ou avec au moins deux masses de chargement différentes (17, 18) de telle sorte qu'une valeur de l'écart angulaire dépendant de la masse de chargement ou des valeurs de l'écart angulaire dépendant de la masse de chargement sont déterminées dans une plage de masses de chargement et/ou des informations destinées à la correction de l'écart angulaire dépendant de la masse de chargement sont obtenues,
b-3) correction de l'écart angulaire dépendant de la masse de chargement en utilisant l'une des valeurs déterminées et/ou les informations obtenues à l'étape a-3).

**2.** Procédé selon la revendication 1, selon lequel au moins l'une des zones de mesure partielles (15, 20) est une zone linéaire cohérente, une zone plane cohérente ou une zone volumique cohérente.

**3.** Procédé selon la revendication 1 ou 2, selon lequel l'écart angulaire dans une zone de mesure partielle est pris en compte conjointement avec un écart de guidage rotatoire d'un mouvement réel de parties de l'appareil de mesure de coordonnées le long d'un axe de déplacement par rapport à un mouvement idéal des parties de l'appareil de mesure de coordonnées le long de l'axe de déplacement, en ce qu'une fonction de correction destinée à la correction de l'écart angulaire et de l'écart des axes est formée, et des valeurs de l'écart angulaire dans l'au moins une zone de mesure partielle et des valeurs de l'écart de guidage rotatoire sont utilisées pour la formation de la fonction de correction.

**4.** Procédé selon l'une des revendications précédentes, une différence entre l'au moins une valeur de l'écart angulaire pour la zone de mesure totale (30) et l'au moins une valeur de l'écart angulaire pour la zone de mesure partielle (15) étant déterminée lors de la correction de l'écart angulaire dépendant du lieu dans l'au moins une zone de mesure partielle, et la différence étant utilisée lors de la correction de l'écart angulaire.

**5.** Procédé selon l'une des revendications 1 à 3, l'au moins une valeur de l'écart angulaire pour la zone de mesure totale (30) n'étant pas prise en compte lors de la correction de l'écart angulaire dépendant du lieu et l'au moins une valeur de l'écart angulaire dans l'au moins une zone de mesure partielle (15) étant utilisée lors de la correction de l'écart angulaire.

**6.** Procédé selon l'une des revendications précédentes, selon lequel l'une parmi la zone de mesure partielle (15) à l'étape a-1) i) ou la zone de mesure partielle à l'étape a-1) ii) est la zone de mesure au-dessus d'un plateau tournant (25).

**7.** Procédé selon la revendication 6, le plateau tournant (25) étant chargé avec une masse de pièce à usiner (17, 18) et une correction de l'écart angulaire dépendant du lieu et une correction de l'écart angulaire dépendant de la masse de chargement étant effectuées.

**8.** Procédé selon l'une des revendications précédentes, selon lequel la zone de mesure partielle (15) dans laquelle est déterminée l'au moins une valeur de l'écart angulaire présente des dimensions identiques ou similaires à une pièce à usiner (17, 18) devant être mesurée.

**9.** Procédé selon l'une des revendications précédentes, la détermination de l'au moins une valeur de l'écart angulaire étant effectuée avec un objet de test (19, 20, 21, 22 ; 40) qui est adapté à la taille de la pièce à usiner (17, 18) devant être mesurée.

**10.** Procédé selon l'une des revendications précédentes, la détermination de l'au moins une valeur de le l'écart angulaire étant effectuée avec un objet de test qui est adapté à la masse et/ou à la position et/ou à l'orientation de la pièce à usiner (17, 18) devant être mesurée.

**11.** Procédé selon l'une des revendications précédentes,

- pour au moins deux zones de mesure partielles (15, 20) de l'appareil de mesure de coordonnées (211), au moins une valeur respective d'un écart angulaire, ou pour au moins une zone de mesure partielle (15) de l'appareil de mesure de coordonnées et une zone de mesure totale (30) de l'appareil de mesure de coordonnées, au moins une valeur respective d'un écart angulaire, et/ou

- pour au moins deux températures, au moins une valeur respective d'un écart angulaire et/ou des informations destinées à la correction d'un écart angulaire dépendant de la température, et/ou

- pour au moins deux masses de chargement (17, 18), au moins une valeur respective d'un écart angulaire et/ou des informations destinées à la correction d'un écart angulaire dépendant de la masse de chargement

étant mis/mises en mémoire dans l'appareil de mesure de coordonnées et utilisée/utilisées lors de la correction de l'au moins une valeur et/ou des informations pour la zone de mesure partielle concernée ou de la zone de mesure totale et/ou pour la température concernée et/ou pour la masse de chargement concernée, notamment utilisée/utilisées automatiquement.

**12.** Procédé selon l'une des revendications précédentes,

- l'instant de la détermination des valeurs ou des informations étant associé aux valeurs de l'écart angulaire ou aux informations destinées à la correction de l'écart angulaire,

- un intervalle de temps entre l'instant de la détermination et l'instant de la correction de l'écart angulaire étant déterminé,

- une valeur indicative étant associée à l'intervalle de temps, la valeur indicative contenant une information relative à la fiabilité et/ou à la validité des valeurs de l'écart angulaire ou la validité des informations destinées à la correction de l'écart angulaire.

**13.** Appareil de mesure de coordonnées (211) qui est conçu pour mettre en oeuvre un procédé selon l'une des revendications 1 à 12, possédant un dispositif de correction (221) qui est configuré pour effectuer la correction d'un écart angulaire.

**14.** Appareil de mesure de coordonnées selon la revendication 13, le dispositif de correction (221) étant configuré pour :

- lors d'une mesure de coordonnées dans une zone de mesure totale (30) de l'appareil de mesure de coordonnées, corriger un écart angulaire en utilisant au moins une valeur de l'écart angulaire dans la zone de mesure totale (30) et lors d'une mesure de coordonnées dans une zone de mesure partielle (15, 20) de l'appareil de mesure de coordonnées, corriger un écart angulaire en utilisant au moins une valeur de l'écart angulaire dans la zone de mesure partielle (15, 20), et/ou

- lors d'une mesure de coordonnées dans une première zone de mesure partielle (15) de l'appareil de mesure de coordonnées, corriger un écart angulaire en utilisant au moins une valeur de l'écart angulaire dans la première zone de mesure partielle (15) et lors d'une mesure de coordonnées dans une deuxième zone de mesure partielle (20) de l'appareil de mesure de coordonnées, corriger un écart angulaire en utilisant au moins une valeur de l'écart angulaire dans la deuxième zone de mesure partielle (20), et/ou

- lors d'une mesure de coordonnées à une première température de mesure, corriger un écart angulaire en utilisant au moins une valeur de l'écart angulaire à la première température de mesure et lors d'une mesure de coordonnées à une deuxième température de mesure, corriger un écart angulaire en utilisant au moins une valeur de l'écart angulaire à la deuxième température de mesure, et/ou

- lors d'une mesure de coordonnées lors d'un chargement avec une première masse (17), corriger un écart angulaire en utilisant au moins une valeur de l'écart angulaire lors du chargement avec la première masse (17) et lors d'une mesure de coordonnées lors d'un chargement avec une deuxième masse (18), corriger un écart angulaire en utilisant au moins une valeur de l'écart angulaire lors du chargement avec la deuxième masse (18).

**15.** Appareil de mesure de coordonnées (211) selon l'une des revendications 13 à 14, possédant une mémoire dans laquelle sont enregistrées les informations suivantes :

- pour au moins deux zones de mesure partielles (15, 20) de l'appareil de mesure de coordonnées (211), au moins une valeur respective d'un écart

**EP 2 972 078 B1**

angulaire, ou pour au moins une zone de mesure partielle (15) de l'appareil de mesure de coordonnées et une zone de mesure totale (30) de l'appareil de mesure de coordonnées, au moins une valeur respective d'un écart angulaire, et/ou

- pour au moins deux températures, au moins une valeur respective d'un écart angulaire et/ou des informations destinées à la correction d'un écart angulaire dépendant de la température,

- pour au moins deux masses de chargement (17, 18), au moins une valeur respective d'un écart angulaire et/ou des informations destinées à la correction d'un écart angulaire dépendant de la masse de chargement.

**Fig.1**

**Fig.2**

Fig.3

Fig.4

Fig.5

Fig.6

35

Fig.7

Fig.8

Fig.9a

Fig.9b

Fig.10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1764579 A1

- WO 02090879 A2

**In der Beschreibung aufgeführte Nicht-Patentliteratur**

- **HANS-GERD PRESSEL.** Genau messen mit Koordinatenmessgeräten. 23-28
- **HANS-GERD PRESSEL.** Genau messen mit Koordinatenmeßgeräten. Verlag, 23-28

- Genau messen mit Koordinatenmessgeräten. Hans-Gerd Pressel. Verlag, 23-28
- **HANS-GERD PRESSEL.** Genau messen mit Koordinatenmeßgeräten. 23-28